(19) Europäisches Patentamt
European Patent Office
Office européen des brevets

(11) **EP 4 644 890 A1**

(12) **EUROPÄISCHE PATENTANMELDUNG**

(43) Veröffentlichungstag:
**05.11.2025  Patentblatt 2025/45**

(51) Internationale Patentklassifikation (IPC):
**G01N 29/06** (2006.01)    **G01N 29/265** (2006.01)
**G01N 29/44** (2006.01)

(21) Anmeldenummer: **24173794.9**

(22) Anmeldetag: **02.05.2024**

(52) Gemeinsame Patentklassifikation (CPC):
**G01N 29/069; G01N 29/265; G01N 29/4418**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Fraunhofer-Gesellschaft zur Förderung
der angewandten Forschung e.V.
80686 München (DE)**

(72) Erfinder: **Schubert, Frank
01277 Dresden (DE)**

(74) Vertreter: **Gagel, Roland
Patentanwalt Dr. Roland Gagel
Landsberger Strasse 480a
81241 München (DE)**

(54) **VERFAHREN ZUR SCANNENDEN BILDGEBENDEN ULTRASCHALLPRÜFUNG**

(57)    Bei einem Verfahren zur scannenden bildgebenden Ultraschallprüfung eines Prüfobjekts (3) werden aus gemessenen oder berechneten raumzeitlichen Sendewellenfeldern $S(r, t)$ jedes eingesetzten Ultraschallwandlers (1, 2, 4) in einem fluiden Umgebungsmedium und geometrischen und/oder materialbezogenen Eigenschaften des Prüfobjektes (3) sowie unter Berücksichtigung der Anordnung des Prüfobjekts (3) relativ zu den Ultraschallwandlern (1, 2, 4) raumzeitliche Wellenfelder $W(r, t)$ für jeden Ultraschallwandler (1, 2, 4) im interessierenden Prüfvolumen berechnet oder abgeleitet und daraus ortsabhängige Maximalamplituden $W_0$ und dazugehörige Laufzeiten $t_0$ extrahiert und in Form diskreter Wellenfeldschablonen gespeichert. Nach oder während der Durchführung eines Ultraschallscans des Prüfobjekts (3) werden dann die detektierten vorzeichenbehafteten Ultraschall-Amplituden $A_i(t)$ des an jedem Messpunkt i detektierten Zeitsignals anhand der in den Wellenfeldschablonen gespeicherten Laufzeiten und Amplituden zur Bildgebung auf ein diskretes ortsfestes Bildgebungsraster gemappt. Dabei erfolgt in jeder Zelle des Bildgebungsrasters je nach Vorhandensein oder Nichtvorhandensein eines lokalen Streuers eine konstruktive oder destruktive Überlagerung von Beiträgen der einzelnen Messpunkte.

Fig. 3

EP 4 644 890 A1

**Beschreibung**

**Technisches Anwendungsgebiet**

Die vorliegende Erfindung betrifft ein Verfahren zur scannenden bildgebenden Ultraschallprüfung eines Prüfobjekts in einem fluiden Umgebungsmedium mit einem oder mehreren bewegten Ultraschallwandlern, bei dem wenigstens ein Ultraschallscan über das Prüfobjekt mit dem oder den Ultraschallwandlern durchgeführt wird, bei dem an jedem Messpunkt des Ultraschallscans ein Zeitsignal mit vorzeichenbehafteten Ultraschall-Amplituden detektiert wird.

Ultraschall-Scanner, meist in Form zwei- oder dreiachsiger mechanischer x-y-(z)-Scanner, zunehmend aber auch als Vielachsenscanner mit mehr als drei Achsen oder als Robotersysteme mit einem oder mehreren Roboterarmen ausgelegt, werden heutzutage standardmäßig für die automatisierte, bildgebende, zerstörungsfreie Prüfung von Probekörpern im Labormaßstab, aber auch von komplexeren Bauteilen im Fertigungsbereich eingesetzt. Als Ultraschallwandler, im Folgenden auch als Prüfköpfe bezeichnet, kommen einkanalige, geometrisch fokussierte, meist piezoelektrische Einzelschwinger zum Einsatz, seltener planare unfokussierte Wandler (mit natürlichem Fokus) oder mehrkanalige Arrays. Der (natürliche oder geometrische) Fokus der Prüfköpfe wird dabei in der Regel durch geeignete Wahl des Prüfkopfabstandes in das Innere des Prüfobjekts gelegt, und zwar in diejenigen Tiefen, in denen die Fehlstellen vermutet werden. Jeder Einzelwandler bzw. jedes Einzelelement eines Arrays kann dabei i.A. sowohl als Sender als auch als Empfänger betrieben werden.

Die Ein- und Auskopplung des Ultraschalls in das bzw. aus dem Prüfobjekt erfolgt entweder über Wasser bzw. eine andere geeignete Flüssigkeit in Form von Tauchtechnik (Immersion, d.h. Objekt liegt komplett unter Wasser), mit lokaler Wasserstrahl- oder Wasserspaltankopplung (SquirterTechnik), oder alternativ auch mit luftgekoppeltem Ultraschall ohne zusätzlichem Koppelmedium. In seltenen Fällen wird ein Scan unter Verwendung eines Koppelmittels auch in Kontakttechnik durchgeführt, wobei der Prüfkopf schleifend oder rollend ("Rollenprüfkopf") oder mit sehr geringem Abstand zur Oberfläche über das Prüfobjekt bewegt wird. Als grundlegende Prüfkonfigurationen sind die Transmissions- oder Durchschallungstechnik (zwei Prüfköpfe auf entgegengesetzten Bauteilseiten), die Impuls-Echo-Technik (ein Prüfkopf auf einer Seite des Bauteils, der sowohl sendet als auch empfängt) sowie die Pitch-Catch-Technik (zwei getrennte Prüfköpfe, entweder auf ein und derselben Bauteilseite oder auf verschiedenen Seiten) bekannt. In der Fachliteratur wird die Impuls-Echo-Konfiguration mit einem Prüfkopf häufig auch als monostatisch, Transmissions- und Pitch-Catch-Konfigurationen mit zwei Prüfköpfen dagegen als bistatisch bezeichnet.

In allen beschriebenen Fällen wird versucht, das sogenannte inverse Problem zu lösen, d.h. aus den an jedem physikalischen Messpunkt des Messrasters bei einem Ultraschall-Scan detektierten Empfangssignalen eine bildgebende, möglichst orts-, geometrie- und größengetreue Darstellung der im Bauteil befindlichen Fehlstellen sowie aller anderen reflektierenden, inneren und äußeren Grenzflächen im Prüfvolumen zu erhalten. Im Vergleich zur bekannten Röntgen-Computertomographie wird dieser Vorsatz bei der Ultraschallprüfung durch verschiedene physikalische Besonderheiten erschwert. Dazu zählen insbesondere die Brechung des Ultraschalls beim schrägen Einfall auf eine Grenzfläche zwischen zwei unterschiedlichen elastischen Medien, die Beugung, Streuung und Abschattung an lokalen Hindernissen, das parallele Auftreten verschiedener Wellentypen, wie z.B. longitudinalen und transversalen Volumenwellen, Oberflächen-, Grenzflächen- und Plattenwellen etc., die Umwandlung von einem Wellentyp in einen anderen (Modenkonversion), die geometrische Aufweitung des Wellenbündels (Divergenz) sowie die i.A. frequenzabhängige Dämpfung durch Streuung an der heterogenen Mikrostruktur des Grundmaterials. Durch diese Phänomene kommt es bei der bildgebenden Darstellung der Fehlstellen zu einer Verfälschung der Ortsinformation, der Echoamplituden, der detektierten Objektgröße und -geometrie sowie dem Auftreten von Phantomechos und anderen Artefakten. Ein häufiges Beispiel für eine solche Fehlabbildung stellen die typischen Streuhyperbeln lokal begrenzter Fehlstellen dar, die durch die Divergenz der Prüfkopfwellenfelder entstehen. Andere Beispiele betreffen z.B. die Abschattung von tieferliegenden Fehlern durch darüberliegende Fehler, die schwächere Darstellung tiefer liegender Streuer durch Dämpfungseffekte und Schallbündelaufweitung, die systematische Überschätzung von Fehlergrößen durch die endlichen Prüfkopfaperturen sowie das Auftreten von Phantomechos und Scheinanzeigen im Randbereich der Prüfobjekte. Diese Fehlabbildungen erschweren die Auffindbarkeit und Interpretation der Fehler und damit auch die Abschätzung des Schadensumfangs und der Restlebensdauer der untersuchten Prüfobjekte. Ziel der jeweiligen Prüfkonfiguration und der verwendeten Bildgebungssoftware im Ultraschall-Scanner ist es daher, das Ausmaß der Artefakte und Bildgebungsfehler möglichst klein zu halten bzw. unvermeidliche systematische Fehler durch spezielle, i.A. aufwändige tomographische Rekonstruktionsverfahren zu korrigieren.

**Stand der Technik**

In den meisten Fällen werden die oben beschriebenen Fehlabbildungen und Artefakte schlichtweg ignoriert und die beim Scan in jedem Messpunkt aufgenommenen unbehandelten Zeitsignale (Rohdaten) als sogenannte B- und C-Bilder dargestellt. Dabei wird jedes gemessene, vorzeichenbehaftete Zeitsignal (das sog. Hochfrequenz(HF)-A-Bild) dem jeweiligen Messpunkt im Messraster und dem darunter senkrecht in das Bauteil weisenden Richtungsvektor oder Lot zugeordnet. Bei einem linearen Scan über N Messpunkte (z.B. entlang der x-Achse) kommt es dadurch zu einer Ansammlung von N detektierten Zeitsignalen. Wandelt man die einzelnen Amplitudenwerte jedes Zeitsignals in eine Grauwert- oder Farbskala um, kann man jedem Pixel des Bildrasters unterhalb des jeweiligen Messpunktes einen entsprechenden Grau- oder Farbwert zuordnen. Die Breite und Höhe des einzelnen Pixels hängt dabei vom gewählten Scanraster sowie dem Zeitsampling der Messhardware ab. Die vertikale Lage jedes Pixels entspricht bei der Impuls-Echo-Messung der Echolaufzeit t des jeweiligen Amplitudenwertes und kann optional mit einer bekannten Schallgeschwindigkeit c des Mediums in eine Tiefeninformation $z = c*t$ umgewandelt werden. Die daraus resultierende zweidimensionale (x-z)- bzw. (x-t)-Darstellung der Rohdaten wird B-Bild genannt. Vergleichbare Abbildungen lassen sich auch für Transmissions- und Pitch-Catch-Messungen erzeugen, wobei dann beide Prüfköpfe meist simultan über die Probe bewegt werden.

Erfolgt der Scan nicht nur über eine einzelne Linie, sondern z.B. mäanderförmig über eine zweidimensionale Fläche, erhält man einen 3D-Datensatz (x,y,t bzw. x,y,z) und kann daraus für eine bestimmte betrachtete Tiefe z (bzw. Echolaufzeit t) oder einen Tiefenbereich [zmin, zmax] bzw. [tmin, tmax] einen zweidimensionalen (x-y)-Tiefenschnitt bzw. eine Tiefenprojektion durch das Prüfobjekt darstellen, das sogenannte C-Bild. Der volle Datensatz kann darüber hinaus in Form eines dreidimensionalen Voxelmodels gespeichert und mit geeigneter Grafiksoftware dargestellt werden.

Ähnlich wie das A-Bild stellen insbesondere die B- und meist auch die C-Bilder (sofern sie für eine feste Tiefe z bzw. Laufzeit t ermittelt wurden) unbehandelte Rohdaten dar, die zahlreiche Bildartefakte aufweisen. Um diese Artefakte zu unterdrücken, wird mit dem anregenden und empfangenden Prüfkopf meist senkrecht eingeschallt, um Brechung und Modenumwandlungseffekte an der Grenzfläche zum Prüfobjekt zu unterdrücken. Weiterhin wird angestrebt, im (natürlichen oder geometrischen) Fokus des Prüfkopfes zu arbeiten, um die real immer vorhandene endliche Ausdehnung und divergente Aufweitung des Ultraschallwellenbündels so gering wie möglich zu halten. Dies ist jedoch nicht immer möglich, da die Tiefenlage der Fehler häufig nicht vorab bekannt ist oder sich von Fehlstelle zu Fehlstelle ändern kann. Weiterhin wird der akustische Fokus in einem Festkörper durch die im Vergleich zum umgebenden Fluid deutlich höheren Schallgeschwindigkeiten stark verkürzt und kann somit nicht auf beliebig große Tiefen im Prüfobjekt eingestellt werden.

Die aufwändigste Möglichkeit zur Kompensation von Abbildungsfehlern stellen tomographische Rekonstruktionen dar. Diese sind aber nur möglich, wenn sich mindestens zwei Richtungsvektoren/Lote in einem einzelnen Pixel bzw. Voxel schneiden und sich die zugehörigen laufzeitabhängigen Amplitudenwerte dort konstruktiv oder destruktiv überlagern lassen. Dies ist bei senkrechtem Einfall auf planare Prüfobjektoberflächen grundsätzlich nie der Fall, da alle Richtungsvektoren dann parallel verlaufen, und erfolgt lediglich im Falle ungleichmäßig gekrümmter Oberflächen sporadisch und zufällig in einzelnen Pixeln bzw. Voxeln des Bildgebungsrasters. Eine Anwendung dieser Technik für alle Pixel/Voxel erfordert nahezu punktförmigen Sende- und Empfangselemente, die klein gegen die dominierenden Wellenlängen sind. In diesem Fall erfolgen die Abstrahlung und der Empfang nahezu isotrop gemäß kugelförmiger Wellenfronten und realisiert somit auch schräge Schalllaufwege, die im Verlauf des Scans alle Pixel/Voxel des Bildgebungsrasters erreichen und mehrfach durchlaufen. Die damit mögliche konstruktive oder destruktive Überlagerung der vorzeichenbehafteten Amplitudenwerte der Zeitsignale wird als Synthetische Apertur und Fokussierungstechnik (SAFT) bezeichnet und ist beispielsweise aus der US 3548642 A bekannt.

Da die bei Ultraschall-Scannern überwiegend eingesetzten Prüfköpfe bzw. Ultraschallwandler noch nicht einmal näherungsweise Punktquellen darstellen, lässt sich die SAFT-Technik in der Scanpraxis angenähert nur dadurch realisieren, dass der (natürliche oder geometrische) Fokus des Prüfkopfes nicht wie üblich in das Volumen des Prüfobjekts gelegt, sondern genau auf dessen Oberfläche platziert wird. Die dort entstehenden sekundären Ultraschallquellen mit der Breite einer halben Wellenlänge können in grober Näherung als Punktquellen angesehen werden und ermöglichen dadurch prinzipiell eine SAFT-Rekonstruktion wie dies beispielsweise in M. Barth et al., "Where X-Ray Imaging Falls - Delamination, Crack, and Micro-Pore Detection Using Ultrasonic Reflection Tomography in a Scanning Acoustic Microscope", IEEE Nuclear Science Symposium and Medical Imaging Conference Record 2008, Seiten 577-581, beschrieben ist. Diese Vorgehensweise weist jedoch bedeutende Nachteile auf. Zum einen wird durch den schrägen Einfall der Randstrahlen auf die Oberfläche ein größerer Anteil der Ultraschallwellen an der Grenzfläche reflektiert und dringt gar nicht erst in das Prüfobjekt ein. Zum anderen erfolgt die Abstrahlung der transmittierten Anteile im Prüfobjekt selbst gemäß der Charakteristik von Kugelwellen, so dass sich die Energie aller sekundären Quellen während des Scans gleichmäßig über das untersuchte Prüfobjektvolumen verteilt. Eine gezielte Platzierung der gesamten vom Prüfkopf abgestrahlten Energie in bestimmten Tiefenbereichen, in denen die Fehler vermutet werden, ist somit nicht möglich. Dies wiederum bedeutet, dass die SAFT-Technik mit sekundären, angenähert punktförmigen Oberflächenquellen zwar eine qualitativ verbesserte Fehlerabbildung ermöglicht, in der Praxis aber immer ein schlechteres Signal/Rausch-Verhältnis aufweisen wird als ein fokussierter Prüfkopf, dessen Fokus genau in der Tiefe des Fehlers liegt.

Ein weiterer Nachteil des SAFT-Ansatzes liegt darin, dass er in der Praxis nur bei Prüfobjekten mit planarer Oberfläche ohne größeren Aufwand realisiert werden kann, da nur dort der Fokusabstand zur Oberfläche während des lateralen Scans konstant bleibt. Bei nichtplanaren geneigten oder gekrümmten Oberflächen ändert sich der Abstand zur Oberfläche ständig, so dass der Fokus an jedem Messpunkt durch Verfahren des Prüfkopfes in z-Richtung auf die neue Oberfläche angepasst werden müsste. Dies würde aber zu inakzeptabel langen Scanzeiten in der (x-y)-Ebene führen.

Ein zusätzlicher bedeutender Nachteil der SAFT-Bildgebung besteht darin, dass die Laufzeitinformationen üblicherweise auf Basis einfacher geometrischer Schalllaufwege und konstanter Schallgeschwindigkeiten in einem homogenen Matrixmedium ermittelt werden. Exaktere wellenphysikalische Schalllaufwege mit Beugung um Hindernisse und heterogene Materialeigenschaften des Matrixmediums lassen sich damit nicht berücksichtigen und führen deshalb zu einer suboptimalen Bildgebung.

Die oben beschriebenen Einschränkungen haben dazu geführt, dass sich die SAFT-Technik bei der scannenden bildgebenden Ultraschallprüfung mit konventionellen Ultraschall-Scannern und auch bei Einsatz robotergestützter Systeme nicht durchsetzen konnte und lediglich einzelnen Spezialanwendungen vorbehalten bleibt. Der Goldstandard beim Ultraschallscan ist somit nach wie vor das klassische B- oder C-Bild der unbehandelten Rohdaten sowie der Einsatz von speziell fokussierten Einzelschwingern, deren Fokus durch einen geeigneten Prüfabstand in einen bestimmten Tiefenbereich des untersuchten Prüfobjekts gelegt wird. Eine universelle tomographische Rekonstruktion zur Korrektur von systematischen Abbildungsfehlern und zur Vermeidung von Bildartefakten bei allen praxisrelevanten Prüfkonfigurationen ist damit nach aktuellem Stand nicht möglich.

Die Aufgabe der vorliegenden Erfindung besteht darin, ein universelles Verfahren zur scannenden bildgebenden Ultraschallprüfung eines Prüfobjekts anzugeben, das für alle relevanten Prüfkonfigurationen eine weitgehend artefaktfreie Bildgebung ohne Bildgebungsfehler ermöglicht.

## Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren zur scannenden bildgebenden Ultraschallprüfung eines Prüfobjekts in einem fluiden Umgebungsmedium mit einem oder mehreren bewegten Ultraschallwandlern werden raumzeitliche Sendewellenfelder $S(\underline{r},t)$ jedes Ultraschallwandlers im fluiden Umgebungsmedium, bspw. Luft oder Wasser, als orts- ($\underline{r}$) und zeitabhängige ($t$) Amplitudenwerte $S(\underline{r},t)$ in einem diskreten Gitter bereitgestellt. Je nach beabsichtigtem Ultraschallscan (1D-Linienscan oder 2D-Flächenscan) kann es sich hierbei um ein zwei- oder dreidimensionales Raumgitter handeln, mit der Zeit t als zusätzlicher Dimension. Die Sendewellenfelder können dabei für jeden Ultraschallwandler entweder durch modellbasierte mathematisch-numerische Berechnung auf Basis von Modellparametern wie Wandlergröße und -geometrie, Mittenfrequenz, Bandbreite und Sendesignalform berechnet oder für jeden Ultraschallwandler explizit vermessen werden oder vermessen worden sein. Anschließend werden unter Verwendung der bereitgestellten Sendewellenfelder im fluiden Umgebungsmedium, von geometrischen und/oder materialbezogenen Eigenschaften des Prüfobjektes und unter Berücksichtigung der räumlichen Anordnung des Prüfobjekts relativ zu dem einen oder den mehreren Ultraschallwandlern für jeden der Ultraschallwandler raumzeitliche Wellenfelder $W(\underline{r},t)$ in einem interessierenden Prüfvolumen modellbasiert berechnet oder abgeleitet. Unter dem interessierenden Prüfvolumen wird dabei das Volumen verstanden, das mit dem Ultraschallscan erfasst und ausgewertet bzw. bildlich dargestellt werden soll. Das interessierende Prüfvolumen kann das gesamte Prüfobjekt oder auch nur einen Teil davon umfassen. Die Eigenschaften des Prüfobjektes beinhalten je nach Zweck des Ultraschallscans die Geometrie und/oder die Materialeigenschaften und/oder den inneren Aufbau des Prüfobjekts, wie z.B. Schichtfolgen, Bohrungen oder Kanäle. Die Berechnung oder Ableitung der raumzeitlichen Wellenfelder erfolgt für jeden beabsichtigten Messpunkt i eines Ultraschallscans mit im Allgemeinen unterschiedlichen geometrischen und/oder materialspezifischen Randbedingungen, kann aber auch für eine bestimmte Anzahl von Messpunkten identisch ausfallen und somit nur einmal berechnet oder abgeleitet werden.

Aus den berechneten oder abgeleiteten raumzeitlichen Wellenfeldern bestimmte bzw. extrahierte ortsabhängige Laufzeiten $t_0$ und Maximalamplituden $W_0$ eines zur Auswertung vorgesehenen Ultraschallwellentyps oder Größen, aus denen diese ortsabhängigen Laufzeiten $t_0$ und Maximalamplituden $W_0$ bestimmbar bzw. extrahierbar sind, werden dann in Form diskreter Wellenfeldschablonen für jeden Messpunkt gespeichert. Bei den Größen, aus denen die ortsabhängigen Laufzeiten $t_0$ und Maximalamplituden $W_0$ bestimmbar bzw. extrahierbar sind, kann es sich beispielsweise um das komplette Zeitsignal des Wellenfeldes oder einen relevanten Zeitabschnitt davon handeln. Diese Wellenfeldschablonen werden jeweils aus einem diskreten Raster aus einzelnen Zellen gebildet, welche eine feste räumliche Lage zum jeweiligen Ultraschallwandler repräsentieren bzw. diesem zugeordnet sind, um einen korrekten Ortsbezug zu ermöglichen.

Bei dem vorgeschlagenen Verfahren wird schließlich wenigstens ein Ultraschallscan über das Prüfobjekt mit dem oder den Ultraschallwandlern durchgeführt, bei dem an jedem Messpunkt i des Ultraschallscans ein Zeitsignal mit vorzeichenbehafteten Ultraschall-Amplituden $A_i(t)$ detektiert wird. Die vorzeichenbehafteten Ultraschall-Amplituden oder daraus abgeleitete Werte, insbesondere der Maximalwert des an jedem Messpunkt i detektierten Zeitsignals werden dann (nach oder während des Ultraschallscans) anhand der in den Wellenfeldschablonen gespeicherten oder aus den dort gespeicherten Größen bestimmbaren Laufzeiten und Maximalamplituden zur Bildgebung auf ein diskretes ortsfestes Bildgebungsraster transferiert ("gemappt"). Dabei erfolgt in jeder Zelle des Bildgebungsrasters je nach Vorhandensein oder Nichtvorhandensein eines lokalen Streuers eine konstruktive oder destruktive Überlagerung von Beiträgen der einzelnen Messpunkte.

Durch die einzelnen Schritte des vorgeschlagenen Verfahrens, insbesondere das Mapping der Zeitsignale bzw. vorzeichenbehafteten Ultraschall-Amplituden auf die tatsächlichen Wellenfelder der beteiligten Ultraschallwandler bzw. Prüfköpfe sowie die parallele Übertragung auf das ortsfeste Bildgebungsraster werden auf einfachem und direktem Wege Artefakt-korrigierte, Orts-, Geometrie- und Größengetreue tomographische Darstellungen aller im Prüfvolumen befindlichen Fehlstellen und Grenzflächen durch konstruktive oder destruktive Summation der Amplitudenwerte in den einzelnen Pixeln bzw. Voxeln des Bildgebungsrasters erreicht. Dabei wird ein überraschend einfacher Zusammenhang zwischen dem vorab zu lösenden Vorwärtsproblem (Ermittlung der Wellenfelder der eingesetzten Ultraschallwandler) und dem inversen Problem (tomographische bildgebende Rekonstruktion auf Basis der Messdaten) ausgenutzt, der bisher nicht bekannt war.

In einer vorteilhaften Ergänzung des vorgeschlagenen Verfahrens wird noch eine nachgeschaltete Korrektur der finalen Amplituden des Bildgebungsrasters unter Ausnutzung der in den Wellenfeldschablonen hinterlegten oder aus den dort abgespeicherten Größen bestimmbaren Maximalamplituden durchgeführt. Dieser Schritt wird im Folgenden als Universal Gain Compensation (UGC) bezeichnet. Diese nachgeschaltete Korrektur führt vorteilhaft zu einer universellen Korrektur der aufsummierten Echo- bzw. Ultraschall-Amplituden, so dass physikalisch gleichartig reflektierende Flächen bei der Bildgebung mit ein- und derselben Echo-Amplitude dargestellt werden, unabhängig von deren Tiefe und Lage.

In einer alternativen Ausgestaltung des oben beschriebenen Verfahrens, bei welcher der oder die Ultraschallwandler beim Ultraschallscan einen direkten Kontakt zum Prüfobjekt aufweist bzw. aufweisen, der Ultraschallscan also ohne fluiden Vorlauf durchgeführt wird (Kontakttechnik) und der oder die Ultraschallwandler während des Scans in schleifendem oder rollendem Kontakt mit dem Prüfobjekt ist bzw. sind, *kann* optional auf die Bereitstellung der Sendewellenfelder der Ultraschallwandler in einem fluiden Umgebungsmedium verzichtet werden. In diesem Falle erfolgt die Berechnung der raumzeitlichen Wellenfelder $W(r,t)$ für jeden Ultraschallwandler modellbasiert direkt im Prüfobjekt durch Vorgabe des tatsächlich verwendeten Sendeimpulses. Ähnlich wie im Fall mit fluidem Vorlauf kann aber auch im Spezialfall Kontakttechnik das Wellenfeld $W(r,t)$ unter Verwendung eines vorab im Fluid gemessenen Sendewellenfeldes berechnet werden. Dazu wird das Sendewellenfeld im Fluid zeitlich rückpropagiert und nach Hinzufügen des Prüfobjektes modellbasiert in dasselbige zeitlich vorwärtspropagiert, so dass die individuellen Besonderheiten des im Fluid gemessenen Sendewellenfeldes auch im Prüfobjekt selbst erhalten bleiben und bei der Bildgebung verwendet werden.

Das vorgeschlagene Verfahren lässt sich in einer Vielzahl von Anwendungsfällen einsetzen. Beispielhafte Anwendungen sind die Nutzung von Ultraschall-Scannern für den Laborbetrieb in Forschungseinrichtungen und Unternehmen, die Ultraschall-Mikroskopie (SAM: Scanning Acoustic Microscopy), z.B. in der Halbleiterindustrie, Sensorik oder Biophysik, die automatisierte Ultraschallprüfung mit Mehrachsen-Scannern, z.B. für Luft- oder Raumfahrtbauteile, die automatisierte Ultraschallprüfung von komplex geformten Bauteilen bzw. Freiform-Bauteilen mit Hilfe von Robotern, z.B. in der Automobil-, Luft- und Raumfahrtindustrie, und der Einsatz luftgekoppelter Ultraschall-Scanner oder Roboter, z.B. für CFK- oder GFK-Bauteile, für andere Komposit-Bauteile sowie für Folien oder Textilien. Weiterhin lässt sich das Verfahren beispielsweise für automatisierte oder halbautomatisierte Rohrleitungs-Scanner oder -molche für die chemische Industrie oder für Pipelines, für die automatisierte oder halbautomatisierte Ultraschallprüfung für Eisenbahn-Radsätze und Radsatzwellen, für scannende Ultraschall-Prüfsysteme für Eisenbahnschienen (manuell) geführt oder im Prüfzug integriert, für scannende Ultraschall-Prüfsysteme für die Blechprüfung, insbesondere auch mit Sende-Empfangs(S/E)-Prüfköpfen, für manuell scannende Ultraschall-Prüfsysteme mit Rollenprüfköpfen, z.B. in der Luft- und Raumfahrt-Industrie oder der chemischen Industrie (für Rohrleitungen, Tanks, Behälter etc.), für scannende Sonarsysteme, für zivile und militärische Unterwasseranwendungen oder für Luft- oder Fluid-gekoppelte Ultraschall-Konturscanner zur Ermittlung von 3D-Oberflächen, -Skulpturen und -Formen einsetzen. Dies ist selbstverständlich keine abschließende vollständige Aufzählung.

**Kurze Beschreibung der Zeichnungen**

Das vorgeschlagene Verfahren wird nachfolgend anhand von Ausführungsbeispielen in Verbindung mit den Zeichnungen nochmals näher erläutert. In den Zeichnungen werden durchgängig einheitliche Symbole mit den folgenden Bedeutungen verwendet:

- Das PC-Symbol ( ) steht für eine modellbasierte mathematisch-numerische Berechnung oder Ableitung.

- Das Mikrofon- bzw. Hydrophon-Symbol ( oder ) steht für eine experimentelle Messung.

- Das gefüllte oder umrahmte Rechteck ( oder ) stellt einen Ultraschallwandler dar.

- Der gefüllte schwarze Punkt (●) stellt eine aktive primäre Ultraschallquelle dar.
- Der umrahmte Punkt (o) stellt einen Streuer oder eine Fehlstelle, also eine passive sekundäre Schallquelle (Streuwelle) dar.
- Das Wellensymbol ($\approx$) stellt das fluide Umgebungsmedium dar.
- Das Symbol ⟩⟩⟩ stellt eine sich von links nach rechts ausbreitende Schallwelle dar.

Die Zeichnungen zeigen:

Fig. 1    ein Beispiel für den ersten Teilschritt einer beispielhaften Ausgestaltung des vorgeschlagenen Verfahrens (Ermittlung des Sendewellenfeldes im fluiden Umgebungsmedium);

Fig. 2    ein Beispiel für den zweiten Teilschritt einer beispielhaften Ausgestaltung des vorgeschlagenen Verfahrens (Berechnung der Wellenfelder im Prüfobjekt und Erzeugung der Wellenfeldschablonen);

Fig. 3    ein Beispiel für den dritten Teilschritt einer beispielhaften Ausgestaltung des vorgeschlagenen Verfahrens (Mapping der Zeitsignale auf das Bildgebungsraster unter Ausnutzung der Wellenfeldschablonen, monostatischer und bistatischer Fall);

Fig. 4    Beispiele für eine durch die Wellenfeldschablonen gesteuerte Summation bzw. Überlagerung von vorzeichenbehafteten Amplitudenwerten der Zeitsignale verschiedener Messpunkte (monostatischer und bistatischer Fall);

Fig. 5    ein Beispiel für den vierten Teilschritt bei einer beispielhaften Ausgestaltung des vorgeschlagenen Verfahrens (Amplitudenkorrektur, Universal Gain Compensation UGC);

Fig. 6    Beispiele für einen Einsatz eines einzelnen bewegten Prüfkopfes beim Ultraschallscan bei einer beispielhaften Ausgestaltung des vorgeschlagenen Verfahrens (monostatischer Fall, Impuls-Echo-Konfiguration);

Fig. 7    Beispiele für einen Einsatz von zwei Prüfköpfen beim Ultraschallscan bei einer beispielhaften Ausgestaltung des vorgeschlagenen Verfahrens (bistatischer Fall, Pitch-Catch-Konfiguration);

Fig. 8    Beispiele für einen Einsatz von zwei Prüfköpfen auf gegenüberliegenden Seiten des Prüfvolumens bei einem Ultraschallscan bei einer beispielhaften Ausgestaltung des vorgeschlagenen Verfahrens (bistatischer Fall, Transmission, Pitch-Catch-Konfiguration);

Fig. 9    Beispiele für den Einsatz von zwei Prüfköpfen auf jeweils aneinandergrenzenden Seiten des Prüfvolumens beim Ultraschallscan bei einer beispielhaften Ausgestaltung des vorgeschlagenen Verfahrens (bistatischer Fall, Pitch-Catch-Konfiguration);

Fig. 10    ein Beispiel für einen Einsatz einer größeren Anzahl von Prüfköpfen für den Ultraschallscan bei einer beispielhaften Ausgestaltung des vorgeschlagenen Verfahrens (mehrere Sender und/oder Empfänger);

Fig. 11    eine Veranschaulichung eines Mehrfach-Durchlaufes einer Ultraschallwelle durch eine zu detektierende Stelle eines Prüfvolumens (direkte und indirekte Beschallung);

Fig. 12    eine Veranschaulichung unterschiedlicher Wellentypen bei der Ausbreitung in einem Prüfvolumen (unterschiedliche Wellentypen von ein- und demselben Wandler);

Fig. 13    eine Veranschaulichung einer mehrstufigen Ultraschall-Bildgebung mit Vorabermittlung einer unbekannten Bauteilgeometrie (erst Bildgebung Bauteiloberfläche, dann Bildgebung innenliegender Fehler);

Fig. 14    eine Veranschaulichung einer mehrstufigen Ultraschall-Bildgebung mit Vorabermittlung ungenau bekannter, innenliegender Geometriekomponenten im Prüfobjekt (erst Bildgebung Geometriekomponente, dann Bildgebung Fehlstelle);

Fig. 15    eine Veranschaulichung einer mehrstufigen Ultraschall-Bildgebung mit Vorabermittlung von vermuteten oder nicht genau bekannten geschichteten oder mehrfach geschichteten Aufbauten des Prüfobjekts (erst Bildgebung Schichten, dann Bildgebung tieferliegender Fehlstellen);

Fig. 16    eine Veranschaulichung des Einsatzes mehrkanaliger bewegter Array- bzw. Phased-Array-Prüfköpfe;

Fig. 17    eine beispielhafte Darstellung, bei der das komplette Zeitsignal jedes Wellenfeldes in der Wellenfeldschablone abgelegt und genutzt wird (statt nur der Maximalwert und dessen Laufzeit).

## Wege zur Ausführung der Erfindung

Das vorgeschlagene Verfahren wird nachfolgend anhand von Ausführungsbeispielen nochmals im Detail in seinen einzelnen, zum Teil optionalen, Schritten erläutert.

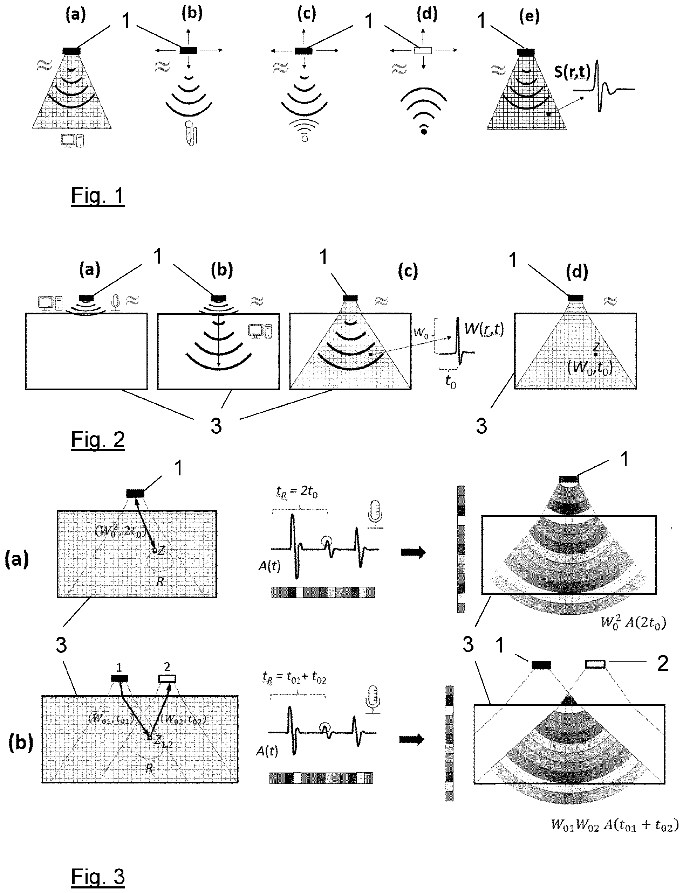

Im ersten Teilschritt wird das raumzeitliche Sendewellenfeld $S(r,t)$ von jedem der beim Scan verwendeten Ultraschallwandler 1 im fluiden Umgebungsmedium ermittelt, also ohne Prüfobjekt oder andere störende Grenzflächen, wie dies in den Teilabbildungen a) bis d) der Figur 1 beispielhaft für unterschiedliche Möglichkeiten veranschaulicht ist. Dies gilt ausdrücklich auch für diejenigen Ultraschallwandler, die ggf. nur empfangen, also nicht aktiv senden. Hierbei wird ausgenutzt, dass Sende- und Empfangswellenfeld bei den üblicherweise im Scanner eingesetzten Wandlern, die sowohl als Sender als auch als Empfänger betrieben werden können, gleichwertig bzw. reziprok sind.

Das Sendewellenfeld $S(r,t)$, in der Regel als raumzeitliche Verteilung des Schalldrucks im Fluid, wird dabei entweder unter Angabe von Wandlergröße und -geometrie sowie von Mittenfrequenz, Bandbreite und Sendesignalform mit Hilfe analytischer, semi-analytischer, numerischer oder hybrider Modelle im gesamten interessierenden Volumenbereich berechnet, wie in Fig. 1a veranschaulicht, oder rein experimentell vermessen (Fig. 1b-d). Experimentell wird das Schallfeld entweder direkt mit einem Hydrophon bzw. Mikrophon wie in Fig. 1b oder auch indirekt mit einem Kugelstreuer vermessen, die jeweils direkt in das Scan-Prüfsystem integriert sind, aber auch in separaten Systemen untergebracht sein können. Dies ist in Figur 1c veranschaulicht. Dazu wird der zu vermessende Prüfkopf 1 auf einem diskreten Raster relativ zum ortsfesten Hydrophon/Mikrophon bzw. Kugelstreuer bewegt und für jeden Rasterpunkt eine Ultraschallmessung durchgeführt. Da es nur auf die Relativbewegung ankommt, kann alternativ auch der Prüfkopf 1 ortsfest sein und Hydrophon/Mikrophon bzw. Kugelstreuer werden bewegt. Beim Hydrophon/Mikrophon wird der ortsabhängige Schalldruck im Fluid direkt gemessen. Beim Kugelstreuer, der i.A. kleiner als die Wellenlängen des verwendeten Ultraschalls sein sollte, wird zunächst seine vom Prüfkopf 1 detektierte Echoamplitude gemessen. Diese steht aber in einem direkten Verhältnis zur Wellenfeldamplitude am Ort des Kugelstreuers selbst.

In Ausnahmefällen, in denen ein Ultraschallwandler aufgrund technischer oder physikalischer Umstände prinzipiell nur als Empfänger, aber nicht als Sender verwendet werden kann, muss statt dem Sendewellenfeld sein Empfangswellenfeld ermittelt werden. Dies erfolgt in der Regel dadurch, dass anstelle der oben beschriebenen Hydrophone, Mikrophone oder Kugelstreuer eine möglichst punktförmige aktive Ultraschallquelle der passenden Frequenz und Bandbreite relativ zum Empfangswandler durch das Fluid bewegt und deren Signal am Empfänger gemessen wird, wie in Fig. 1d schematisch dargestellt. Anschließend kann das Empfangswellenfeld aufgrund der Reziprozität mit einem virtuellen Sendewellenfeld für den betreffenden Ultraschallwandler gleichgesetzt werden.

Die Speicherung der Sendewellenfelder $S(r,t)$ erfolgt auf einem diskreten, meist kartesischen Gitter, wobei die Gitterweite vorzugsweise im Bereich einer halben Wellenlänge (Mittenwellenlänge der angeregten Ultraschallwellen im Fluid) oder kleiner sein sollte. Für jede Gitterzelle wird vorzugsweise das vollständige Zeitsignal im relevanten Zeitfenster abgelegt. Dies ist in Fig. 1e schematisch dargestellt. Die Ermittlung der Sendewellenfelder muss für jeden Prüfkopf in der Regel nur ein einziges Mal erfolgen und das Wellenfeld kann anschließend für spätere Anwendungen abgespeichert und wiederverwendet werden. Da sich reale Prüfköpfe mitsamt Ihres Schallfeldes im Laufe der Zeit jedoch verändern können (z.B. durch hineindiffundierende Feuchtigkeit oder andere Verschleißmechanismen) sollte die experimentelle Schallfeldvermessung (falls sie verwendet wird) in gewissen regelmäßigen Abständen wiederholt werden.

Als weitere Alternative zur Ermittlung der Sendewellenfelder kann neben der rein modellbasierten Berechnung (auf Basis theoretischer, idealisierter Modellparameter des Prüfkopfes) und der rein experimentellen Messung ein dritter hybrider Ansatz verfolgt werden. Dabei werden die für das mathematisch-numerische Modell des Prüfkopfes notwendigen Input-Parameter (Wandlergröße und - geometrie, Mittenfrequenz, Bandbreite und Sendesignalform) aus den experimentellen Daten des realen Prüfkopfes abgeleitet und anschließend als Eingangsgrößen für das mathematisch-numerische Modell verwendet. Auf diese Weise können die individuellen Besonderheiten realer Prüfköpfe in das Modell überführt und für die spätere Bildgebung verwendet werden.

Um die im ersten Teilschritt rechentechnisch, experimentell oder hybrid ermittelten Sendewellenfelder $S(r,t)$ in das zu untersuchende Prüfobjekt oder Prüfvolumen zu propagieren, wird ein analytisches, semi-analytisches, numerisches oder hybrides Rechenmodell verwendet, wie dies anhand der Fig. 2 veranschaulicht wird. Hierzu können kommerzielle, aber auch eigenentwickelte Simulationsprogramme, z.B. auf Basis von Finite Elemente-, Finite Differenzen-, Finite Volumen- oder Finite Integrationsmethoden eingesetzt werden. Beispiele für bekannte kommerzielle Softwareprogramme sind etwa Comsol Multiphysics, Abaqus Explicit, Ansys oder auch CIVA-UT. Die Basis jedes Rechenmodells besteht aus dem fluiden Umgebungsmedium, in welches das zu untersuchende Prüfobjekt 3 bzw. Prüfvolumen gemäß dem tatsächlichen Prüfaufbau eingebettet ist. Dazu müssen im vorliegenden Beispiel Geometrie, Lage und Orientierung des Prüfobjekts 3 bzw. Prüfvolumens, sein innerer Aufbau, die verwendeten Materialien und akustischmechanischen Materialkennwerte sowie die Prüfkopfkonfiguration bekannt sein. Das im ersten Teilschritt ermittelte Sendewellenfeld im Fluid wird in geeigneter Weise als Quellanregung in das mathematisch-numerische Vorwärtsmodell integriert, wobei i.A. nur eine dünne Fluidschicht mit einer Dicke von wenigen Wellenlängen benötigt wird (Fig. 2a). Wurde das Sendewellenfeld experimentell ermittelt, müssen die Quellsignale ggf. vorab gefiltert bzw. geglättet werden, um numerische Artefakte bei der Berechnung zu vermeiden.

Die oben beschriebene explizite Einbindung des Sendewellenfeldes als Quellanregung kann auch im Sonderfall der Kontakttechnik realisiert werden, um z.B. experimentelle Wellenfelddaten realer Prüfköpfe ins Prüfobjektmodell einzuspeisen. Dazu ist allerdings eine spezielle Rückwärtssimulation (zeitliche Rückpropagation) des Sendewellenfeldes im Fluid über die Kontaktfläche des Prüfkopfes hinaus mit anschließender Vorwärtssimulation (zeitliche Vorwärtspropagation) ins Prüfobjekt notwendig. Liegen dagegen keine experimentellen, sondern nur simulativ ermittelte Sendewellenfelder im Fluid vor, erfolgt die Quellanregung direkt an der Kontaktfläche zwischen Prüfkopf und Oberfläche des Prüfobjekts durch Vorgabe des bereits in der Fluidsimulation gewählten Sendeimpulses.

Nach Festlegung bzw. Einbindung der Quellanregung wird eine Vorwärtsrechnung gestartet und das Anregungswellenfeld in das Prüfobjekt 3 bzw. Prüfvolumen hinein propagiert, wobei die Wechselwirkung mit allen bekannten inneren und äußeren Grenzflächen des Prüfobjekts 3 bzw. Prüfvolumens berücksichtigt wird (Fig. 2b). Als Konsequenz kann jedem berechneten Punkt des Wellenfeldes $W(\underline{r},t)$ im Prüfobjekt 3 bzw. Prüfvolumen eine Laufzeit sowie eine i.A. zeitabhängige Amplitude zugeordnet werden (Fig. 2c).

Aus den rechentechnisch ermittelten Wellenfelddaten im Prüfobjekt bzw. Prüfvolumen wird nunmehr eine diskrete Wellenfeldschablone für jeden vorhandenen Prüfkopf 1 aufgestellt. Dazu wird ein diskretes Raster, bestehend aus kartesischen oder auch nicht-kartesischen Zellen definiert, welche eine feste Lage zum jeweiligen Prüfkopf aufweisen und in ihrer Gesamtheit alle relevanten Teile des Wellenfeldes umfassen (Fig. 2d). Die Größe der einzelnen Zellen sollte mindestens in der Größenordnung einer halben Wellenlänge (Mittenwellenlänge im Prüfkopf bzw. Prüfvolumen) liegen oder noch kleiner sein. Grundsätzlich sind aber auch größere Zellen möglich, wobei dies allerdings mit Einbußen bei der späteren Bildauflösung einhergeht. In jede diskrete Zelle Z der Wellenfeldschablone wird nun im vorliegenden Beispiel der Betrag der maximalen Amplitude des zur Bildgebung vorgesehenen Wellentyps $W_0$ sowie die Laufzeit dieser Amplitude vom Prüfkopf 1 bis zur Zelle $t_0$ eingetragen (Fig. 2c + d). Da diese Werte aus den rechentechnisch ermittelten Wellenfelddaten extrahiert werden, kommen u.U. geeignete Mittelungstechniken und/oder Interpolationen zum Einsatz, um zwischen dem ursprünglichen Rechengitter und dem Raster der Wellenfeldschablone zu vermitteln.

Die oben beschriebene Prozedur wird für jeden beim Scan verwendeten Prüfkopf 1 durchgeführt, unabhängig ob dieser nur sendet oder (auch) empfängt, so dass abschließend Wellenfeldschablonen für alle beteiligten Prüfköpfe 1 vorliegen. Für physikalisch identische Messpunkte, d.h. Messpunkte mit gleichen geometrischen und/oder materialspezifischen Randbedingungen, müssen die Wellenfeldschablonen immer nur einmal je Prüfkopf ermittelt werden und können anschließend für jeden Messpunkt während des Scans in unveränderter Form eingesetzt werden. Dies ist z.B. bei einfachen plattenförmigen, homogenen Prüfobjekten, festem Abstand des Prüfkopfes zur Plattenoberfläche sowie bei ausreichendem Abstand des Messpunktes zu den lateralen Begrenzungsflächen des Prüfobjektes der Fall. Bei nichtplanaren Oberflächen, inhomogenem oder anisotropem Grundmaterial, unterschiedlichem Abstand des Prüfkopfes zur Oberfläche oder in der Nähe der lateralen Begrenzungsflächen des Prüfobjekts werden vorzugsweise für jeden physikalisch unterschiedlichen Messpunkt eigene Wellenfeldschablonen berechnet und abgespeichert. Die Wellenfeldschablonen werden in diesem Fall nicht nur prüfkopf- sondern auch messpunktabhängig.

Ein Sonderfall liegt vor, wenn sich die unbekannten nachzuweisenden Defekte bzw. Streuer nicht in einem festen Prüfobjekt, sondern im fluiden Umgebungsmedium selbst befinden. Dies ist z.B. bei der Konturvermessung von Prüfobjekten im Wasserbad oder auch mit luftgekoppeltem Ultraschall der Fall. In dieser Situation kann die Wellenfeldschablone meist direkt aus dem Sendewellenfeld im Fluid extrahiert bzw. abgeleitet werden, ohne dass eine zusätzliche rechentechnische Propagation in ein festes Prüfobjekt notwendig wird. Die Wellenfeldschablone ist dann meist auch messpunktunabhängig. Sind von den direkt ins Fluid eingebetteten Streuern aber einige im Voraus bekannt, so können diese im Vorwärtsmodell berücksichtigt werden. Dazu muss erneut eine rechentechnische Propagation der Sendewellenfelder in ein separates Prüfvolumen mit den bekannten Streuern durchgeführt werden. Die Wellenfeldschablonen hängen dann wieder vom jeweiligen Messpunkt ab bzw. müssen für jeden Messpunkt separat ermittelt werden.

In einer Impuls-Echo-Konfiguration mit einem einzelnen Prüfkopf, der sendet und empfängt, entspricht die Echolaufzeit $t_R$ eines möglicherweise im Prüfobjekt 3 bzw. Prüfvolumen vorhandenen Reflektors R, der sich in einer bestimmten Zelle Z der aktuellen Wellenfeldschablone befindet bzw. dieser zugeordnet werden kann, der Laufzeit vom Prüfkopf 1 zum Reflektor in Z und wieder zurück (vgl. Fig. 3a, linkes Teilbild). Somit entspricht die Echolaufzeit im A-Bild immer genau dem Doppelten der im obigen zweiten Teilschritt ermittelten und in der Wellenfeldschablone abgelegten Laufzeit $t_0$ für den Hinweg vom Prüfkopf 1 zur Zelle Z, also $t_R = 2 \cdot t_0$ (Fig. 3a, mittleres Teilbild). Da dem direkten Laufweg vom Prüfkopf 1 zur Zelle Z in der Wellenfeldschablone die Maximalamplitude $W_0$ zugeordnet ist und der Rückweg von $Z$ zum Prüfkopf 1 reziprok zum Hinweg ist, wird dem vollständigen Laufweg die Gesamtamplitude $W_R = W_0 * W_0 = (W_0)^2$ als Gewichtungsfaktor zugeordnet (Fig. 3a, linkes und rechtes Teilbild). Mit diesen Informationen können die vorzeichenbehafteten Amplituden des A-Bildes auf das tatsächlich vorliegende, vollständige Wellenfeld des Prüfkopfes gemappt werden, wobei jeder Zelle $Z$ der Wellenfeldschablone mit dem Eintrag $(W_0, t_0)$ die Amplitude $A(2t_0)$ des gemessenen Zeitsignals zugeordnet und anschließend durch Multiplikation mit $(W_0)^2$ gewichtet wird (Fig. 3a, rechtes Teilbild). Damit entspricht der finale Mapping-Beitrag eines Reflektors R in jeder Zelle Z der Wellenfeldschablone in monostatischer Impuls-Echo-Konfiguration dem Wert

$$W_R\, A(t_R)\ =\ (W_0)^2 A(2t_0)\,. \tag{1}$$

Für getrennte Sender und Empfänger im bistatischen Pitch-Catch- oder Transmissionsmodus oder bei sogenannten Sende/Empfangs(SE)-Prüfköpfen liegt i.A. eine Überlagerung der Wellenfelder von Sender und Empfänger vor, wie dies in Fig. 3b, linkes und rechtes Teilbild, beispielhaft angedeutet ist. Der Grad der Überlagerung hängt vom lateralen Abstand der beiden Wandler 1, 2 sowie von deren vertikalem Abstand zur Objektoberfläche ab. Zur Veranschaulichung sind in Fig. 3b im linken und rechten Teilbild zwei Fälle mit unterschiedlichem Überlagerungsgrad dargestellt. Ein Reflektor R, der von beiden Wellenfeldern erfasst wird, befindet sich demnach immer sowohl in einer Zelle $Z_1$ der Wellenfeldschablone des ersten Prüfkopfes 1 (des Senders), als auch in einer Zelle $Z_2$ der Wellenfeldschablone des zweiten Prüfkopfes 2 (des Empfängers) (Fig. 3b, linkes Teilbild). Die Echolaufzeit des Reflektors in dem am Empfänger gemessenen A-Bild ergibt sich somit als Summe der Einträge der beiden Wellenfeldschablonen, also $t_R = t_{01} + t_{02}$ (Fig. 3b, mittleres Teilbild). Dies entspricht der Laufzeit vom Sender 1 zum Reflektor R plus der Laufzeit vom Reflektor R zum Empfänger 2. Letztere ist aufgrund des Reziprozitätsprinzips identisch mit der Laufzeit eines (virtuellen) Sendesignals vom Empfänger zum Reflektor, so wie in der Wellenfeldschablone des Empfängers explizit hinterlegt. Da den beiden Einzellaufwegen in den Wellenfeldschablonen die Maximalamplituden $W_{01}$ und $W_{02}$ zugeordnet sind, wird dem vollständigen Laufweg die Gesamtamplitude $W_R = W_{01} * W_{02}$ als Gewichtungsfaktor zugeordnet (Fig. 3b, linkes und rechtes Teilbild). Mit diesen Informationen können die vorzeichenbehafteten Amplituden des A-Bildes auf das tatsächlich vorliegende, vollständige Wellenfeld des Prüfkopfes gemappt werden, wobei jeder Zelle $Z_{1,2}$ der Wellenfeldschablone mit den Einträgen $(W_{01}, t_{01})$ und $(W_{02}, t_{02})$ die Amplitude $A(t_{01} + t_{02})$ des gemessenen Zeitsignals zugeordnet und anschließend durch Multiplikation mit $W_{01}\, W_{02}$ gewichtet wird (Fig. 3b, rechtes Teilbild). Damit entspricht der finale Mapping-Beitrag eines Reflektors R in jeder Zelle Z der Wellenfeldschablone im bistatischen Fall dem Wert

$$W_R\, A(t_R)\ =\ (W_{01}\ W_{02})\, A(t_{01}+t_{02})\,. \tag{2}$$

Während des Scans des Prüfkopfes bzw. der Prüfköpfe entlang der Oberfläche des Prüfobjekts bzw. des Prüfvolumens wird von der Messhardware an jedem diskreten Messpunkt $P_k$ (mit k = 1, ..., K) ein gesampeltes diskretes Zeitsignal, das sogenannte HF-A-Bild am Ort des Empfängers aufgenommen. Es liefert für jeden diskreten Zeitpunkt $t_s$ (mit $s$ = 1, ..., S) einen vorzeichenbehafteten Amplitudenwert $A_k(t_s)$. Bei dieser Amplitude kann es sich z.B. um den Schalldruck oder eine Vektorkomponente der Schallschnelle, Auslenkung oder auch Beschleunigung handeln.

Vor Beginn des Scans werden die Amplitudenwerte eines ortsfesten Bildgebungsrasters initialisiert. Während des Scans überstreichen die aktuellen mitbewegten Wellenfeldschablonen von Sender und Empfänger das Bildgebungsraster, so dass jeder Zelle $B_R$ des Bildgebungsrasters an jedem Messpunkt $P_k$ die oben ermittelte Reflektorlaufzeit $t_R$ sowie der dazugehörige Amplitudengewichtungsfaktor $W_R$ zugeordnet werden kann. Mit Hilfe dieser Größen wird zum aktuellen Inhalt der Bildgebungszelle $B_R$ die Amplitude $W_R * A_k(t_R)$ hinzuaddiert:

$$B_R^{Neu}\ =\ B_R^{Alt}\ +\ W_R * A_k(t_R)\,, \tag{3}$$

wobei jeweils die Ausdrücke (1) für den monostatischen und (2) für den bistatischen Fall zu verwenden sind. Der Ausdruck (3) repräsentiert die zentrale Mapping-Vorschrift des hier beschriebenen Verfahrens. Der Wert $A_k(t_R)$ wird dabei in der Regel als Interpolation zwischen zwei benachbarten Samples des A-Bildes ermittelt, da $t_R$ i.A. zwischen zwei diskreten benachbarten Zeitsamples $s_1$ und $s_2$ liegt. Fällt $t_R$ mit einem der beiden Samples zusammen, kann auf die Interpolation verzichtet werden. Der Gewichtungsfaktor $W_R$ kann in Ausnahmefällen auch manuell auf 1 gesetzt werden, falls eine Bildgebung ohne Gewichtungsfaktoren gewünscht wird.

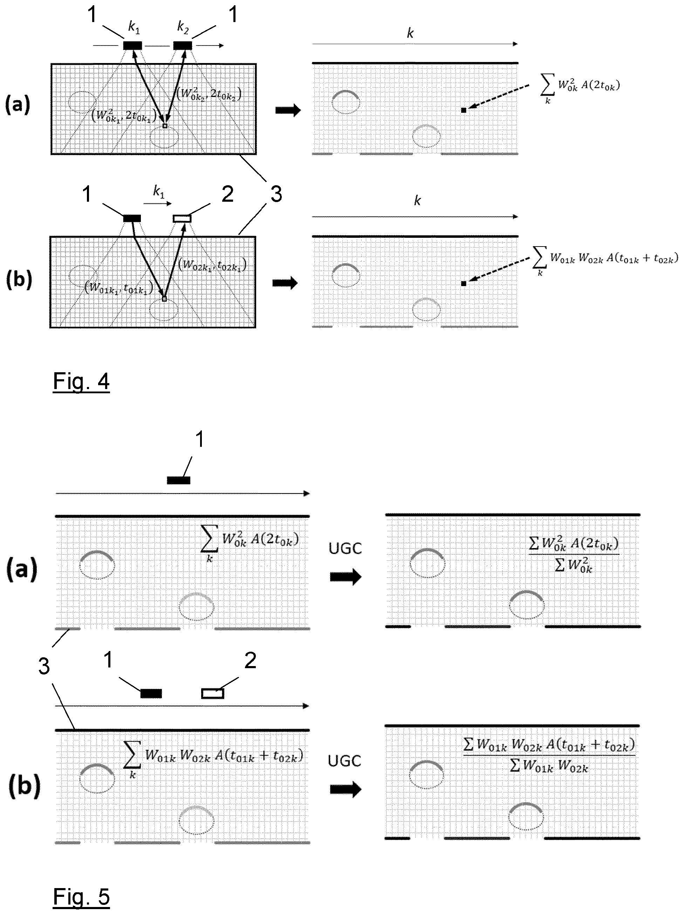

Durch das obige Verfahren ergibt sich in jeder Bildgebungszelle $B$ des ortsfesten Bildgebungsrasters eine durch die Wellenfeldschablonen explizit gesteuerte Summation bzw. Überlagerung von vorzeichenbehafteten Amplitudenwerten der Zeitsignale verschiedener Messpunkte k, wie in Fig. 4 veranschaulicht:

$$B_{Ges} = \sum_k W_{0k}^2 \, A(2t_{0k}) \qquad\qquad (4)$$

für den monostatischen Fall (Fig. 4a) und

$$B_{Ges} = \sum_k W_{01k} W_{02k} \, A(t_{01k} + t_{02k}) \qquad\qquad (5)$$

für die bistatische Konfiguration (Fig. 4b).

Die Wellenfeldschablonen stellen also eine Art Maske oder Filter dar, durch welche(n) die Amplitudenwerte des Zeitsignals auf das ortsfeste Bildgebungsraster gemappt werden. Die oben beschriebene Summation ist konstruktiv (d.h. sie führt zu einer großen resultierenden Amplitude), wenn sich in der Zelle tatsächlich ein Reflektor befindet, und destruktiv, wenn sich kein Reflektor dort befindet (Amplitude nahe Null). Somit erfolgt durch das oben beschriebene Mapping eine zellweise Rekonstruktion oder Migration der Echoamplituden auf ihren tatsächlichen Ursprungsort, nämlich die Grenzfläche des (möglicherweise vorhandenen) reflektierenden Streuers. Dieses Vorgehen ermöglicht eine weitgehend artefaktfreie, orts-, geometrie- und größengetreue, tomographische Darstellung aller im Prüfobjekt- bzw. Prüfvolumen befindlichen Fehlstellen und Grenzflächen. Die Bildgebung wird dadurch realisiert, dass die finalen Amplitudenwerte in jeder Zelle des Bildgebungsrasters (oder alternativ auch deren Beträge oder deren Betragsquadrate) in eine Graustufen- oder Farbskala umgerechnet und pixel- bzw. voxelbasiert dargestellt werden (Fig. 4, jeweils rechtes Teilbild).

Die für die Migration notwendigen raumzeitlichen Beziehungen zwischen dem ortsfesten Bildgebungsraster und den i.A. messpunktabhängigen Wellenfeldschablonen sowie die daraus abgeleiteten Reflektorlaufzeiten, Amplitudengewichtungsfaktoren und zu migrierenden Zeitsamples des aktuellen A-Bildes können bereits im Vorfeld der eigentlichen Messung und Bildgebung berechnet und in geeigneten Look-Up-Tabellen gespeichert werden. Somit müssen während des Scans und der Migration außer der trivialen Amplitudensummation keine weiteren Berechnungen mehr durchgeführt werden. Da die zellweise Summation zudem hochgradig parallelisierbar ist, kann sie durch den Einsatz paralleler Algorithmen auf Basis von multiplen CPU- und/oder GPU-Kernen realisiert werden. Durch eine A-Bild-bezogene Gestaltung der Look-Up-Tabellen kann zudem jedes während des Scans neu gemessene Zeitsignal unmittelbar nach seiner Migration verworfen werden. Es ist somit nicht notwendig, den kompletten A-Bild-Datensatz aller Messpunkte im Speicher zu halten. Optional kann jedoch auch ein konventioneller pixel- bzw. voxelgetriebener Ansatz realisiert werden, bei dem der komplette A-Bild-Datensatz über alle Scanpunkte zunächst gespeichert und erst nach Beendigung der Messungen migriert wird. Das Ergebnis dieser Bildgebung ist mathematisch mit demjenigen des A-Bildbezogenen Ansatzes identisch.

Die oben beschriebene Migration der Echosignale führt zu erhöhten Amplitudenwerten am Ort der reflektierenden Grenzflächen. Die Höhe dieser Amplitudenwerte hängt aber nicht nur von den Unterschieden in den akustischen Impedanzen der beiden angrenzenden Materialien ab, sondern auch von den am Ort der Grenzfläche auftretenden (Sende)Amplituden der beteiligten Prüfköpfe. Dies führt z.B. dazu, dass physikalisch identisch reflektierende Grenzflächen, die sich in unterschiedlichen Tiefen befinden, mit unterschiedlich rekonstruierten Echoamplituden dargestellt werden, da die Wellenfelder der Prüfköpfe in größeren Tiefen durch Divergenz und andere Dämpfungseinflüsse meist kleinere Amplituden aufweisen als in geringeren Tiefen (Fig. 5, jeweils linke Teilbilder). Um diese Unterschiede wieder auszugleichen, kann eine universelle Korrektur aller auf dem Bildgebungsraster nach der Migration vorliegenden Amplituden vorgenommen werden.

Dazu wird zunächst für jede Bildgebungszelle $B$ eine Summation der Beträge aller dort während der Migration wirksamen Amplitudengewichtungsfaktoren vorgenommen, $\Sigma\,(W_{0k})^2$ für den monostatischen und $\Sigma\,(W_{01k} + W_{02k})$ für den bistatischen Fall. Anschließend wird der vorzeichenbehaftete migrierte Echoamplitudenwert jeder Zelle $B$ gemäß Gleichung (4) und (5) durch diese Summe dividiert:

$$B_{Ges}^{korr} = \frac{\sum W_{0k}^2 A(2t_{0k})}{\sum W_{0k}^2}$$

für den monostatischen und

$$B_{Ges}^{korr} = \frac{\sum W_{01k} W_{02k} \, A(t_{01k} + t_{02k})}{\sum W_{01k} W_{02k}}$$

für den bistatischen Fall.

Dadurch werden die Amplitudenwerte einer Bildgebungszelle verstärkt, wenn die Gesamtsumme der Gewichtungsfaktoren dieser Zelle bei der Migration klein war, und verringert, falls diese Summe groß war. Nach dieser Korrektur und einer etwaigen Re-Normierung weisen alle physikalisch identisch reflektierenden Grenzflächen unabhängig von ihrer Lage und Tiefe die gleiche Echoamplitude auf (Fig. 5, jeweils rechtes Teilbild). Die hier beschriebene Korrektur ist erst nach der eigentlichen Migration sinnvoll, wenn sich das Signal-RauschVerhältnis durch die Überlagerung der verschiedenen Beiträge bereits stark verbessert hat. Bei einer vor der Migration durchgeführten Korrektur (was auf eine Migration ohne Gewichtungsfaktoren hinauslaufen würde), würden auch die Rauschanteile deutlich verstärkt werden.

Das oben beschriebene Vorgehen hat Ähnlichkeiten mit der einfachen Tiefenausgleichs- oder TGC-Methode (Time-Gain-Compensation) in der konventionellen Ultraschallprüfung bzw. medizinischen Ultraschalldiagnostik, ist aber wesentlich universeller, da es auf dem durch die Wellenfeldschablonen bereitgestellten, expliziten Wellenfeld der beteiligten Prüfköpfe im Prüfobjekt bzw. im Prüfvolumen basiert. In der vorliegenden Patentanmeldung wird dieses Verfahren deshalb als Universal Gain Compensation (UGC) bezeichnet. Es ermöglicht über die reine Geometrieermittlung der streuenden Grenzfläche hinaus prinzipiell auch eine quantitative Auswertung der akustischen Impedanzunterschiede und somit eine Charakterisierung der auf beiden Seiten der Grenzfläche vorhandenen Materialien. Ist z.B. die akustische Impedanz auf einer Seite der Grenzfläche bekannt, kann auf Basis der an der Grenzfläche rekonstruierten Echoamplitude die Impedanz des zweiten Materials ermittelt werden. Sind dagegen beide akustischen Impedanzen unbekannt, kann durch einen Vergleich mit einem bekannten Referenzreflektor zumindest der Impedanzunterschied an der Grenzfläche ermittelt werden.

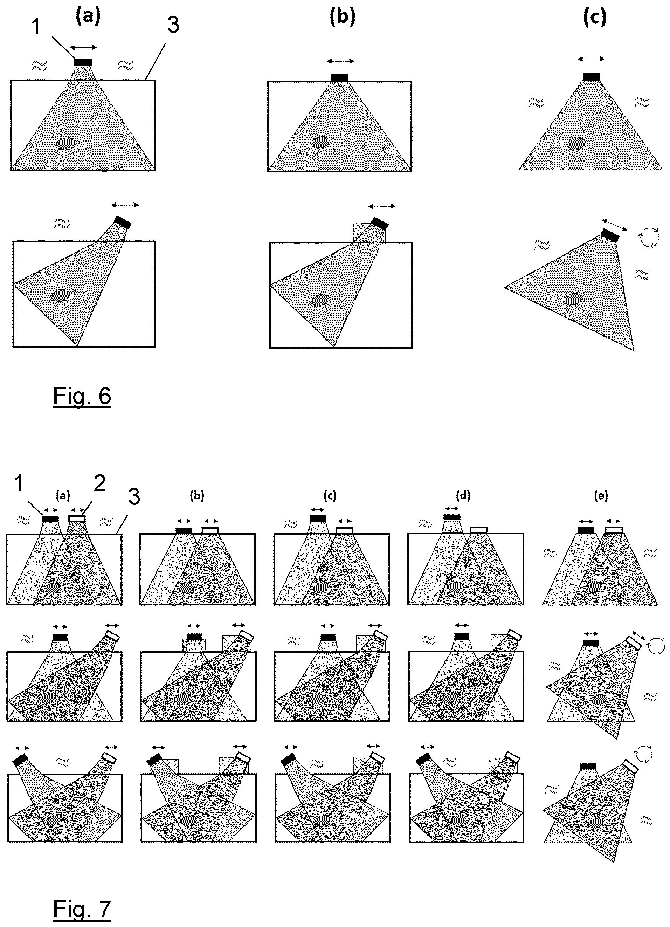

Hinsichtlich des Einsatzes der Prüfköpfe beim Ultraschallscan des vorliegenden Verfahrens sind unterschiedliche Varianten möglich, von denen im Folgenden einige anhand der Figuren 6 bis 10 kurz erläutert werden.

Bei der ersten Variante wird ein einzelner bewegter Prüfkopf 1 auf einer Seite des Prüfobjekts 3 bzw. Prüfvolumens, senkrecht oder unter einem andern Winkel einschallend, im monostatischen Impuls-Echo-Modus eingesetzt, wie dies in Fig. 6 in unterschiedlichen Ausgestaltungen dargestellt ist. Die Ausgestaltung der Fig. 6a zeigt den Prüfkopf 1 mit Abstand zum Prüfobjekt 3 in einem Fluid (Tauch- oder Squirtertechnik), senkrecht oder unter einem anderen Winkel einschallend. Die Ausgestaltung der Fig. 6b zeigt den Prüfkopf 1 mit oder ohne Vorlaufkeil, ohne oder nur mit sehr geringem Abstand zum Prüfobjekt 3 mit dünner Koppelschicht, senkrecht oder unter einem anderen Winkel einschallend. Die Ausgestaltung der Fig. 6c zeigt den Prüfkopf 1 in einem Fluid ohne Materialgrenze zum Prüfvolumen (Konturvermessung), mit beliebigem Einschallungswinkel.

Für das A-Bild-Mapping wird in dieser Variante lediglich die Wellenfeldschablone des einen Prüfkopfes 1 benötigt, da derselbe Prüfkopf auch als Empfänger fungiert. Für die Ausgestaltung der Fig. 6b wird für die Winkeleinschallung ggf. ein Vorlaufkeil berücksichtigt. Für Ausgestaltung der Fig. 6a wird das Wellenfeld des Prüfkopfes 1 im Fluid (simulativ oder experimentell) ermittelt und simulativ ins Prüfobjekt/Prüfvolumen propagiert. Dies gilt auch für die Ausgestaltung der Fig. 6b. Hier kann das Wellenfeld im Prüfobjekt 3 alternativ aber auch auf direktem Wege simuliert werden, d.h. ohne Umweg über das Fluid, ggf. unter Berücksichtigung des Vorlaufkeils. In der Ausgestaltung der Fig. 6c erfolgt lediglich eine (simulative oder experimentelle) Wellenfeldermittlung im Fluid. Die Propagation ins Prüfobjekt entfällt. Die Winkelposition wird durch Neigung bzw. Drehung des Prüfkopfes 1 realisiert, wie schon in der Ausgestaltung der Fig. 6a.

Bei der zweiten Variante werden zwei Prüfköpfe 1, 2 auf einer Seite des Prüfobjekts 3 bzw. Prüfvolumens, senkrecht und/oder mit Winkeleinschallung, im bistatischen Pitch-Catch-Modus, jeweils sendend und/oder empfangend eingesetzt, wie dies in Fig. 7 in unterschiedlichen Ausgestaltungen dargestellt ist. Die Ausgestaltung der Fig. 7a zeigt beide bewegte Prüfköpfe 1, 2 mit Abstand zum Prüfobjekt/Prüfvolumen in einem Fluid (Tauch- oder Squirtertechnik), senkrecht und/oder mit Winkel einschallend. In der Ausgestaltung der Fig. 7b werden beide bewegte Prüfköpfe 1, 2 jeweils mit oder ohne Vorlaufkeil, ohne oder nur mit sehr geringem Abstand zum Prüfobjekt/Prüfvolumen mit dünner Koppelschicht eingesetzt, wobei beide Prüfköpfe 1, 2 jeweils senkrecht oder unter einem anderen Winkel einschallen. Dies schließt im Sonderfall auch sogenannte Sende/Empfangs(SE)-Wandler ein, bei denen zwei physisch getrennte Wandlerelemente mit einem bestimmten Winkel zueinander in ein und demselben Prüfkopfgehäuse untergebracht und mit einem Vorlaufkeil mit zwei akustisch separierten Vorlaufstrecken betrieben werden. Bei der Ausgestaltung der Fig. 7c wird ein bewegter Prüfkopf 1 mit Abstand in einem Fluid und der andere bewegte Prüfkopf 2 mit oder ohne Vorlaufkeil, ohne oder nur mit sehr geringem Abstand zum Prüfobjekt/Prüfvolumen mit dünner Koppelschicht eingesetzt, wobei beide Prüfköpfe 1, 2 jeweils senkrecht oder unter einem anderen Winkel einschallen. Bei der Ausgestaltung der Fig. 7d werden ein bewegter und ein unbewegter Prüfkopf eingesetzt, jeweils mit oder ohne Abstand zum Prüfobjekt/Prüfvolumen, jeweils mit oder ohne Winkeleinschallung.

Bei der Ausgestaltung der Fig. 7e werden beide Prüfköpfe 1, 2 in einem Fluid ohne Materialgrenze zum Prüfvolumen (Konturvermessung) eingesetzt, jeweils bewegt (bzw. rotierend) oder unbewegt, mit beliebigem Einschallungswinkel.

Für das A-Bild-Mapping werden in dieser Variante die Wellenfeldschablonen beider Prüfköpfe 1, 2 benötigt. Dazu müssen die (Sende)-Wellenfelder der Prüfköpfe im Fluid (simulativ oder experimentell) ermittelt und anschließend simulativ ins Prüfobjekt/Prüfvolumen propagiert werden. Im Falle der (teilweisen) Kontakttechnik (Ausgestaltungen der Fig. 7b, 7c und 7d) können die betreffenden Wellenfelder im Prüfobjekt alternativ auch auf direktem Wege simuliert werden, d.h. ohne Umweg über das Fluid. In der Ausgestaltung der Fig. 7e erfolgt lediglich eine (simulative oder experimentelle) Wellenfeldermittlung im Fluid. Die Propagation ins Prüfobjekt entfällt dort.

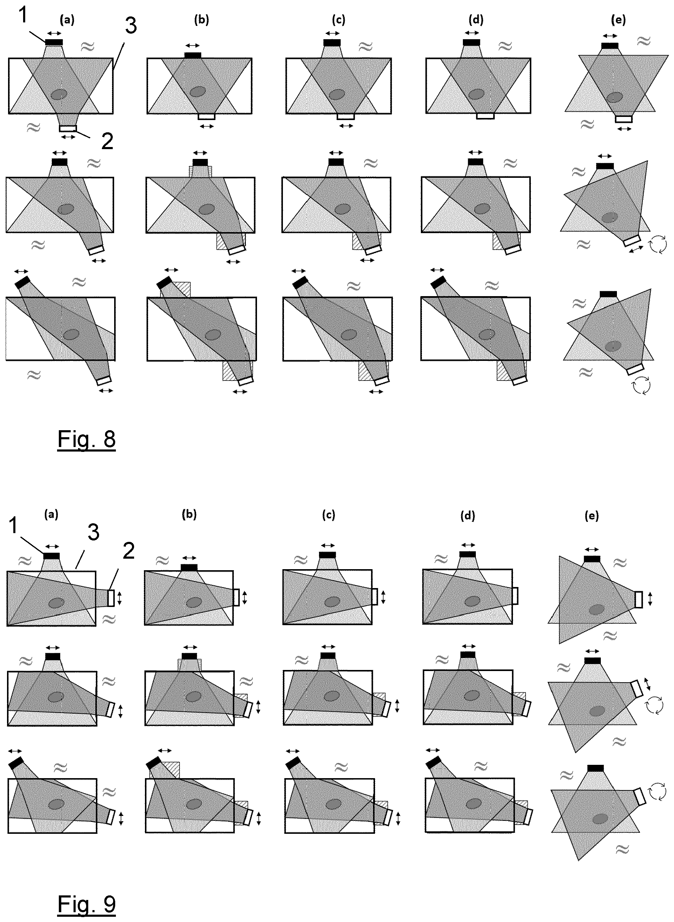

Bei der dritten Variante werden zwei Prüfköpfe 1, 2 auf gegenüberliegenden Seiten des Prüfobjekts bzw. Prüfvolumens, senkrecht oder mit Winkel einschallend, im bistatischen Transmissions-Modus, jeweils sendend und/oder empfangend eingesetzt, wie dies in Fig. 8 in unterschiedlichen Ausgestaltungen dargestellt ist. Die beiden Prüfköpfe 1, 2 müssen sich dabei nicht zwingend direkt gegenüberstehen, sondern können auch einen lateralen Versatz aufweisen. Die Ausgestaltung der Fig. 8a zeigt beide bewegte Prüfköpfe 1, 2 mit Abstand zum Prüfobjekt/Prüfvolumen in einem Fluid (Tauch- oder Squirtertechnik), senkrecht oder mit Winkel einschallend. Bei der Ausgestaltung der Fig. 8b werden beide bewegte Prüfköpfe 1, 2 jeweils mit oder ohne Vorlaufkeil, ohne oder nur mit sehr geringem Abstand zum Prüfobjekt/-Prüfvolumen mit dünner Koppelschicht eingesetzt, beide Prüfköpfe 1, 2 jeweils senkrecht oder mit Winkel einschallend. Bei der Ausgestaltung der Fig. 8c wird ein bewegter Prüfkopf 1 mit Abstand in einem Fluid und der andere bewegte Prüfkopf 2 mit oder ohne Vorlaufkeil, ohne oder nur mit sehr geringem Abstand zum Prüfobjekt/Prüfvolumen mit dünner Koppelschicht eingesetzt, wobei beide Prüfköpfe 1, 2 jeweils senkrecht oder unter einem anderen Winkel einschallen. Bei der Ausgestaltung der Fig. 8d wird ein bewegter und ein unbewegter Prüfkopf eingesetzt, jeweils mit oder ohne Abstand zum Prüfobjekt/Prüfvolumen, jeweils mit oder ohne Winkeleinschallung. Die Fig. 8e zeigt eine Ausgestaltung mit zwei bewegten Prüfköpfen 1, 2 in einem Fluid ohne Materialgrenze zum Prüfvolumen (Konturvermessung), jeweils bewegt oder unbewegt, mit beliebigem Einschallungswinkel.

Für das A-Bild-Mapping werden in dieser Variante die Wellenfeldschablonen beider Prüfköpfe 1, 2 benötigt. Dazu müssen die (Sende)-Wellenfelder der Prüfköpfe 1, 2 im Fluid (simulativ oder experimentell) ermittelt und anschließend simulativ ins Prüfobjekt/Prüfvolumen propagiert werden. Im Falle der (teilweisen) Kontakttechnik (Ausgestaltungen der Fig. 8b, 8c und 8d) können die betreffenden Wellenfelder im Prüfobjekt 3 alternativ auch auf direktem Wege simuliert werden, d.h. ohne Umweg über das Fluid. In Ausgestaltung der Fig. 8e erfolgt lediglich eine (simulative oder experimentelle) Wellenfeldermittlung im Fluid. Die Propagation ins Prüfobjekt entfällt.

Bei der vierten Variante werden zwei Prüfköpfe 1, 2 auf jeweils aneinandergrenzenden Seiten des Prüfobjekts bzw. Prüfvolumens, senkrecht oder mit Winkel einschallend, im bistatischen Pitch-Catch-Modus, jeweils sendend und/oder empfangend eingesetzt, wie dies in Fig. 9 in unterschiedlichen Ausgestaltungen dargestellt ist. Die beiden Prüfköpfe 1, 2 müssen dabei nicht zwingend senkrecht zueinander angeordnet sein. Sie können je nach Geometrie des Prüfobjekts auch andere Winkel relativ zueinander aufweisen. Die Ausgestaltung der Fig. 9a zeigt beide bewegte Prüfköpfe 1, 2 mit Abstand zum Prüfobjekt/Prüfvolumen in einem Fluid (Tauch- oder Squirtertechnik), senkrecht oder mit Winkel einschallend. Bei der Ausgestaltung der Fig. 9b werden beide bewegte Prüfköpfe 1, 2 jeweils mit oder ohne Vorlaufkeil, ohne oder nur mit sehr geringem Abstand zum Prüfobjekt/Prüfvolumen mit dünner Koppelschicht eingesetzt, beide Prüfköpfe 1, 2 jeweils senkrecht oder mit Winkel einschallend. Bei der Ausgestaltung der Fig. 9c wird ein bewegter Prüfkopf 1 mit Abstand in einem Fluid und der andere bewegte Prüfkopf 2 mit oder ohne Vorlaufkeil, ohne oder nur mit sehr geringem Abstand zum Prüfobjekt/Prüfvolumen mit dünner Koppelschicht eingesetzt, beide Prüfköpfe 1, 2 jeweils mit oder ohne Winkeleinschallung. Bei der Ausgestaltung der Fig. 9d werden ein bewegter und ein unbewegter Prüfkopf, jeweils mit oder ohne Abstand zum Prüfobjekt/Prüfvolumen eingesetzt, jeweils mit oder ohne Winkeleinschallung. Die Fig. 9e zeigt eine Ausgestaltung mit zwei bewegten Prüfköpfen 1, 2 in einem Fluid ohne Materialgrenze zum Prüfvolumen (Konturvermessung), jeweils bewegt oder unbewegt, mit beliebigem Einschallungswinkel.

Für das A-Bild-Mapping werden in dieser Variante die Wellenfeldschablonen beider Prüfköpfe 1, 2 benötigt. Dazu müssen die (Sende)Wellenfelder der Prüfköpfe 1, 2 im Fluid (simulativ oder experimentell) ermittelt und anschließend simulativ ins Prüfobjekt/Prüfvolumen propagiert werden. Im Falle der (teilweisen) Kontakttechnik (Ausgestaltungen der Fig. 9b, 9c und 9d) können die betreffenden Wellenfelder im Prüfobjekt alternativ auch auf direktem Wege simuliert werden, d.h. ohne Umweg über das Fluid. In der Ausgestaltung der Fig. 9e erfolgt lediglich eine (simulative oder experimentelle) Wellenfeldermittlung im Fluid. Die Propagation ins Prüfobjekt entfällt.

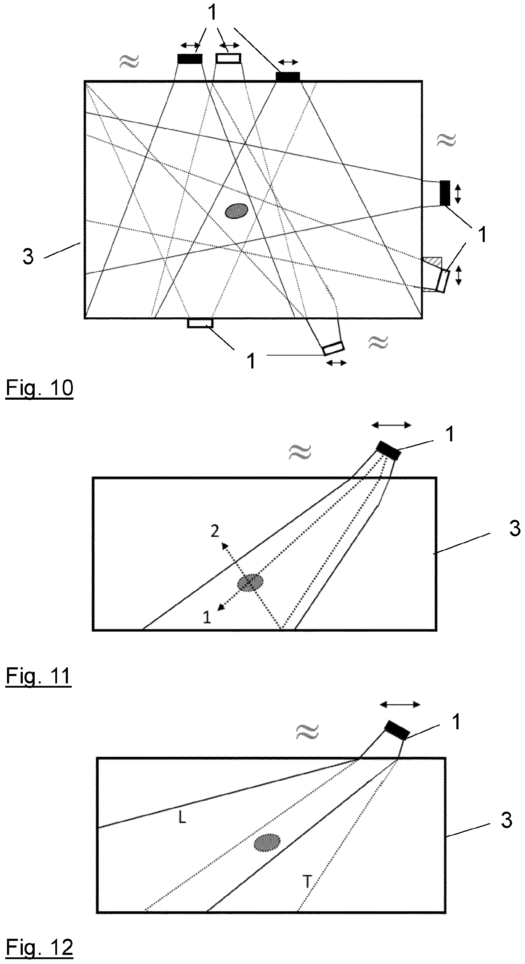

Fig. 10 zeigt eine Ausgestaltung, bei der mehr als ein Sendeprüfkopf 1 und/oder mehr als ein Empfangsprüfkopf 1 in einer der vier oben erläuterten geometrischen Konfigurationen im Impuls-Echo-, Transmissions- oder Pitch-Catch-Modus oder einem Mix aus diesen Varianten eingesetzt wird. In diesem Fall können mehrfache Überlappungen zwischen Sende- und Empfangswellenfeldern für die Auswertung herangezogen und kombiniert werden. Dies verbessert die Qualität der Bildgebung.

In einigen Fällen kommt es vor, dass ein- und dieselbe Welle nicht nur einmal, sondern mehrmals durch die einzelnen Zellen der Wellenfeldschablone bzw. des Bildgebungsrasters bzw. durch die Orte im Prüfobjekt/Prüfvolumen läuft, denen diese Zellen zugeordnet sind, wie dies in Fig. 11 veranschaulicht ist. So kann z.B. eine in eine Platte als Prüfobjekt 3 eingeschallte Volumenwelle (longitudinal oder transversal) zum einen auf direktem Wege zur betrachteten Zelle laufen (Weg 1 in Fig. 11), zum anderen aber auch über die Rückwand dorthin reflektiert werden (Weg 2 in Fig. 11). Die Volumenwelle durchläuft die Zelle der Wellenfeldschablone bzw. des Bildgebungsrasters somit zweimal zu unterschiedlichen Zeiten, so dass gleich zwei Einträge für die Laufzeiten und Maximalamplituden in die Wellenfeldschablone erfolgen können. Damit können auch zwei Amplitudenwerte in ein und dieselbe Bildgebungszelle gemappt und somit tomographisch kombiniert werden, was die Qualität der Abbildung weiter verbessert.

Da die Bildgebung in Festkörpern nicht auf einen Wellentyp (z.B. die Longitudinalwelle) beschränkt ist, können für jeden einzelnen Prüfkopf und jeden Messpunkt unterschiedliche Wellenfeldschablonen für alle denkbaren Wellentypen und auch für modenkonvertierte Wellen erstellt werden. Somit könnten z.B. bei Schrägeinschallung sowohl die Longitudinal- (L) als auch die Transversalwelle (T), wie sie in Fig. 12 schematisch dargestellt sind, zur Bildgebung genutzt werden. Die Bildgebungsergebnisse beider Wellentypschablonen lassen sich kombinieren bzw. fusionieren, so dass eine noch bessere Bildgebung erreicht werden kann.

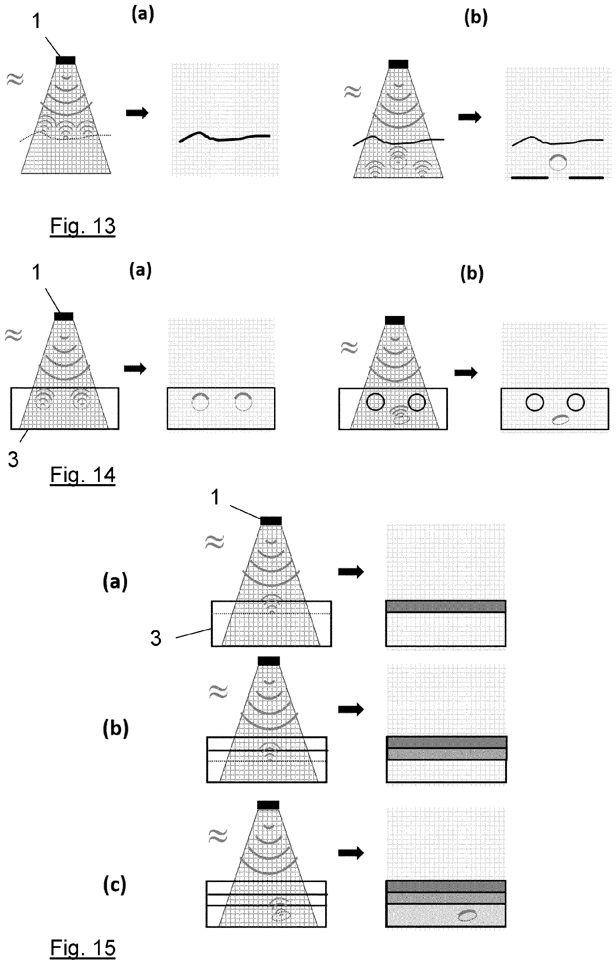

Bei einer unbekannten oder nur ungenau bekannten Geometrie des Prüfobjekts kann die Migration der Echosignale zweistufig durchgeführt werden, und zwar derart, dass in einem ersten Schritt zunächst die äußeren Begrenzungsflächen des Prüfobjekts (z.B. die Oberseite einer Platte im Wasserbad) auf Basis der Wellenfeldschablonen der Sendewellenfelder der Prüfköpfe im umgebenden Fluid rekonstruiert werden (vgl. Fig. 13a), anschließend neue Wellenfeldschablonen unter Berücksichtigung der rekonstruierten Grenzfläche und des Materialübergangs zum Festkörper ermittelt werden, und dann in einem zweiten Migrationsschritt die Rekonstruktion der Fehlstellen und Streuer im Inneren des festen Prüfobjekts auf Basis der neuen Wellenfeldschablonen erfolgt (vgl. Fig. 13b).

Auch bei unbekannten oder nur ungenau bekannten Geometriekomponenten im Prüfobjekt selbst (z.B. Bohrungen) kann die Migration der Echosignale zweistufig durchgeführt werden, und zwar derart, dass in einem ersten Schritt zunächst nur die Geometriekomponenten im Prüfobjekt auf Basis der Wellenfeldschablonen für das Prüfobjekt ohne Geometriekomponente rekonstruiert werden (vgl. Fig. 14a), anschließend neue Wellenfeldschablonen unter Berücksichtigung der rekonstruierten Grenzfläche der Geometriekomponente und ggf. des Übergangs zum Matrixmaterials ermittelt werden, und dann in einem zweiten Migrationsschritt die Rekonstruktion der Fehlstellen und Streuer im Inneren des kompletten Prüfobjekts auf Basis der neuen Wellenfeldschablonen erfolgt (vgl. Fig. 14b).

Bei einem nur vermuteten oder nicht genau bekannten geschichteten oder mehrfach geschichteten Aufbau des Prüfobjekts kann die Migration der Echosignale zwei- oder mehrstufig durchgeführt werden, und zwar derart, dass in einem ersten Schritt zunächst nur die erste Grenzfläche zwischen erster und zweiter Lage (vgl. Fig. 15a) und anschließend sukzessive alle weiteren Grenzflächen darunter, jeweils auf Basis der Wellenfeldschablonen für das Prüfobjekt mit den im Schritt zuvor ermittelten Grenzflächen, rekonstruiert werden (vgl. Fig. 15b). Dies setzt neben der geometrischen Rekonstruktion der jeweiligen Grenzfläche auch die Kenntnis der an der Grenzfläche anliegenden Materialien voraus, z.B. durch a-priori-Wissen oder durch eine quantitative Rekonstruktion der physikalisch korrekten Echoamplituden durch die weiter oben beschriebene UGC. Als abschließender Schritt kann schließlich die Rekonstruktion der Fehlstellen und Streuer im Inneren des kompletten Prüfobjekts auf Basis der neuen Wellenfeldschablonen für das (mehrfach) geschichtete Prüfobjekt erfolgen (vgl. Fig. 15c).

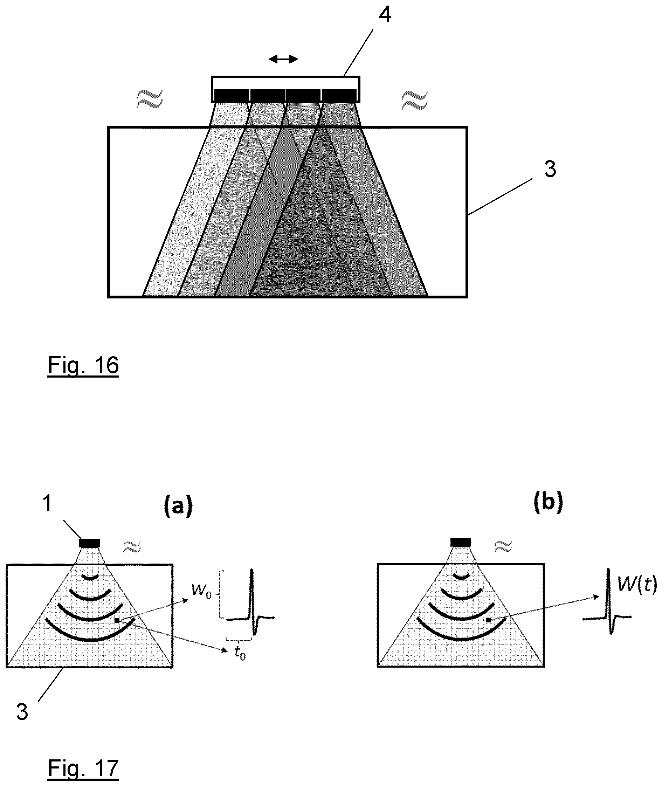

Als Alternative zu den üblicherweise eingesetzten einkanaligen Prüfköpfen bzw. -Prüfkopfpaaren können einzelne oder alle Prüfköpfe auch als mehrkanalige Array- bzw. Phased-Array-Prüfköpfe 4 verwendet und über das Prüfobjekt 3 bewegt werden, wie dies in Fig. 16 schematisch angedeutet ist. Je nach Anwendung bilden dabei spezielle, durch Beamforming vorab eingestellte Gesamtwellenfelder des Mehrkanalwandlers, die Einzelwellenfelder der Wandlerelemente oder die Wellenfelder von bestimmten Gruppen von Wandlerelementen der mehrkanaligen Prüfköpfe 4 die Grundlage für die Wellenfeldschablonen. Die in Verbindung mit den Figuren 1 bis 5 beschriebenen Schritte werden in gleicher Weise, also ebenfalls zum Teil nur optional, auch bei dieser Alternative durchgeführt.

Statt die Wellenfeldschablonen und das anschließende Mapping der Zeitsignale auf das Bildgebungsraster nur mit den Maximalamplituden der Sendewellenfelder und deren Laufzeiten durchzuführen wie in Fig. 17a schematisch angedeutet, kann auch das komplette Zeitsignal jedes Sendewellenfeldes bzw. der den relevanten Teil des Sendesignals betreffende Zeitabschnitt in jeder Zelle der zugehörigen Wellenfeldschablone abgelegt werden (vgl. Fig. 17b). Im Anschluss kann dann in jeder Zelle des Bildgebungsrasters eine Migration des vollständigen Echosignals (statt nur dem Maximum) durchgeführt werden. Aus diesem migrierten Zeitsignal kann dann wahlweise z.B. das globale Maximum oder Minimum, das globale Extremum, eine integrierte Signalleistung oder jeder andere beliebige Signalparameter extrahiert und der einzelnen Zelle des Bildgebungsrasters zugeordnet werden. Damit lässt sich die Qualität der Abbildung, insbesondere das Signal/Rausch-Verhältnis sowie die Bildauflösung weiter verbessern.

Mit dem vorgeschlagenen Verfahren wird statt der sonst üblichen Darstellung von unbehandelten Rohdaten in Form von B- und C-Bildern eine universelle tomographische Rekonstruktion der während des Scans aufgenommenen Echosignale ermöglicht, die mit jedem beliebigen Prüfkopf und jedem beliebigen Wellenfeld funktioniert. Bislang war das nur theoretisch mit (real nicht verfügbaren) punktförmigen Sendern und Empfängern bzw. mit für die Praxis unrealistischen künstlichen Prüfkonfigurationen möglich. Mit dem vorgeschlagenen Verfahren werden systematische Abbildungsfehler korrigiert und Bildartefakte vermieden. Damit wird eine deutlich verbesserte Bildgebung sowie erstmalig eine orts-, geometrie- und größengetreue, hochqualitative Darstellung der im Prüfobjektvolumen befindlichen Fehlstellen sowie der reflektierenden inneren und äußeren Grenzflächen des Prüfobjekts ermöglicht. Zusätzlich zur rein geometrischen Rekonstruktion der reflektierenden Grenzflächen kann mit Hilfe der optionalen Universal Gain Compensation (UGC) auch eine Rekonstruktion der physikalisch korrekten Echoamplituden und somit eine quantitative Charakterisierung der an der Grenzfläche anliegenden Materialien bzw. deren akustischer Impedanzen erfolgen. Ist die Impedanz auf einer Seite der Grenzfläche bekannt, kann auf Basis der an der Grenzfläche rekonstruierten Echoamplitude die Impedanz des zweiten Materials ermittelt werden. Sind beide Impedanzen unbekannt, kann durch einen Vergleich mit einem bekannten Referenzreflektor zumindest der Impedanzunterschied an der Grenzfläche ermittelt werden. Erstmalig kann die exakte Geometrie und der innere Aufbau des untersuchten Prüfobjekts bei der Abbildung explizit mit berücksichtigt werden. Bei den sonst üblichen B- und C-Bildern wird dies ignoriert. Im Unterschied zur SAFT-Technik kann die neue Bildgebung auch für heterogene Bauteile und Prüfvolumina durchgeführt werden, sofern der innere Aufbau des Prüfobjekts, seiner inneren Lagen und Geometriekomponenten bekannt ist. Ist er nicht bekannt, kann er durch stufenweise Rekonstruktion, wie in den Ausführungsbeispielen der Fig. 13 bis 15 erläutert, ermittelt werden. Bei Verwendung der experimentell gemessenen Wellenfelder können die individuellen Besonderheiten jedes einzelnen Prüfkopfes direkt in der tomographischen Bildgebung berücksichtigt werden. Damit wird die Bildgebung für den gerade verwendeten Prüfkopf optimiert und evtl. vorhandene Unregelmäßigkeiten seines Wellenfeldes ausgeglichen. Bei allen bisherigen Scansystemen werden die tatsächlichen Wellenfelder der real verwendeten Prüfköpfe dagegen weitgehend ignoriert. Durch die explizite Verwendung der Prüfkopfwellenfelder im Prüfobjekt/Prüfvolumen kann erstmalig die gesamte Wellenphysik explizit berücksichtigt werden. Die inverse Bildgebung ist somit nicht mehr nur auf einfache Modelle auf Basis der geometrischen Akustik begrenzt (wie beim SAFT-Verfahren), sondern kann die real vorliegende Komplexität der Wellenausbreitung berücksichtigen. Dadurch können auch unterschiedliche Wellentypen und modenkonvertierte Wellen genutzt werden. In Fachkreisen besteht die weitverbreitete Lehrmeinung bzw. das Vorurteil, dass die Lösung des inversen Problems bei der Ultraschallbildgebung eine sehr viel schwierigere Aufgabe darstellt als die Berechnung von Vorwärtsmodellen. Durch die vorliegende Erfindung wird das inverse Problem durch die Vermessung und/oder (Vorwärts)Berechnung der Prüfkopfwellenfelder sowie das anschließende Mapping der Zeitsignale auf die daraus abgeleiteten Wellenfeldschablonen automatisch mitgelöst. Der Komplexitätsgrad des inversen Problems ist somit nahezu identisch mit demjenigen des Vorwärtsproblems, für welches heute viele leistungsfähige Rechenmethoden und -programme existieren. Mit der vorliegenden Erfindung wird der überwiegende Teil des Rechenaufwandes auf die Lösung von Vorwärtsmodellen *vor* dem Scan übertragen, während sich die eigentliche Rekonstruktion auf eine denkbar einfache mathematische Summation von vorzeichenbehafteten Amplitudenwerten in den einzelnen Zellen des ortsfesten Bildgebungsrasters beschränkt. Dadurch kann die tomographische Bildgebung effektiv parallelisiert und auch in drei Dimensionen sehr schnell durchgeführt werden.

Zusammengefasst ist der wichtigste Vorteil des erfindungsgemäßen Verfahrens die universelle, erstmalig für alle Prüfkopfarten und Prüfkonfigurationen sowie alle realistischen Prüfobjektgeometrien mögliche, hochqualitative, bildgebende, tomographische Rekonstruktion der streuenden bzw. reflektierenden Grenzflächen unter expliziter Berücksichtigung der vorab ermittelten, individuellen Prüfkopfwellenfelder und der vorab bekannten Prüfobjekteigenschaften. Die sehr einfach und schnell zu implementierende Mapping-Technik führt unmittelbar zu einer weitgehend artefaktfreien, orts-, geometrie- und größengetreuen Darstellung der im Volumen des Prüfobjekts bzw. im Prüfvolumen befindlichen Fehlstellen und Grenzflächen.

## Patentansprüche

1. Verfahren zur scannenden bildgebenden Ultraschallprüfung eines Prüfobjekts (3) in einem fluiden Umgebungsmedium mit einem oder mehreren bewegten Ultraschallwandlern (1, 2, 4), bei dem

   - raumzeitliche Sendewellenfelder $S(r,t)$ jedes Ultraschallwandlers (1, 2, 4) im fluiden Umgebungsmedium als Werte auf einem diskreten Gitter bereitgestellt werden,
   - unter Verwendung der bereitgestellten Sendewellenfelder $S(r,t)$ im fluiden Umgebungsmedium, von geometrischen und/oder materialbezogenen Eigenschaften des Prüfobjektes (3) und unter Berücksichtigung der Anordnung des Prüfobjektes (3) relativ zu dem einen oder den mehreren Ultraschallwandlern (1, 2, 4) für jeden der Ultraschallwandler (1, 2, 4) raumzeitliche Wellenfelder $W(r,t)$ in einem interessierenden Prüfvolumen berechnet oder abgeleitet werden,
   - aus den raumzeitlichen Wellenfeldern $W(r,t)$ ortsabhängige Laufzeiten $t_0$ und Maximalamplituden $W_0$ wenigstens eines zur Auswertung vorgesehenen Wellentyps oder Größen, aus denen diese ortsabhängigen Laufzeiten $t_0$ und Maximalamplituden $W_0$ ableitbar sind, bestimmt und in Form diskreter Wellenfeldschablonen gespeichert werden, die jeweils aus einem diskreten Raster aus einzelnen Zellen gebildet sind, welche einer festen Lage zum jeweiligen Ultraschallwandler (1, 2, 4) zugeordnet sind,
   - wenigstens ein Ultraschallscan über das Prüfobjekt (3) mit dem oder den Ultraschallwandlern (1, 2, 4) durchgeführt wird, bei dem an jedem Messpunkt i des Ultraschallscans ein Zeitsignal mit vorzeichenbehafteten Ultraschall-Amplituden $A_i(t)$ detektiert wird, und
   - die vorzeichenbehafteten Ultraschall-Amplituden $A_i(t)$ oder daraus abgeleitete Werte des an jedem Messpunkt i detektierten Zeitsignals anhand der in den Wellenfeldschablonen gespeicherten Laufzeiten und Maximalamplituden oder Größen zur Bildgebung auf ein diskretes ortsfestes Bildgebungsraster gemappt werden.

2. Verfahren zur scannenden bildgebenden Ultraschallprüfung eines Prüfobjekts (3) mit einem oder mehreren Ultraschallwandlern (1, 2, 4) in bewegtem, schleifenden oder rollenden Kontakt mit dem Prüfobjekt (3), bei dem

- unter Verwendung von geometrischen und/oder materialbezogenen Eigenschaften des Prüfobjektes (3) und unter Berücksichtigung der Anordnung des Prüfobjektes (3) relativ zu dem einen oder den mehreren Ultraschallwandlern (1, 2, 4) für jeden der Ultraschallwandler (1, 2, 4) raumzeitliche Wellenfelder $W(\underline{r},t)$ in einem interessierenden Prüfvolumen des Prüfobjekts (3) berechnet werden,
- aus den raumzeitlichen Wellenfeldern $W(\underline{r},t)$ ortsabhängige Laufzeiten $t_0$ und Maximalamplituden $W_0$ wenigstens eines zur Auswertung vorgesehenen Wellentyps oder Größen, aus denen diese ortsabhängigen Laufzeiten $t_0$ und Maximalamplituden $W_0$ ableitbar sind, bestimmt und in Form diskreter Wellenfeldschablonen gespeichert werden, die jeweils aus einem diskreten Raster aus einzelnen Zellen gebildet sind, welche einer festen Lage zum jeweiligen Ultraschallwandler (1, 2, 4) zugeordnet sind,
- wenigstens ein Ultraschallscan über das Prüfobjekt (3) mit dem oder den Ultraschallwandlern (1, 2, 4) durchgeführt wird, bei dem an jedem Messpunkt i des Ultraschallscans ein Zeitsignal mit vorzeichenbehafteten Ultraschall-Amplituden $A_i(t)$ detektiert wird, und
- die vorzeichenbehafteten Ultraschall-Amplituden $A_i(t)$ oder daraus abgeleitete Werte des an jedem Messpunkt i detektierten Zeitsignals anhand der in den Wellenfeldschablonen gespeicherten Laufzeiten und Maximalamplituden oder Größen zur Bildgebung auf ein diskretes ortsfestes Bildgebungsraster gemappt werden.

3. Verfahren nach Anspruch 1,
   **dadurch gekennzeichnet,**
   **dass** die raumzeitlichen Sendewellenfelder $S(\underline{r},t)$ jedes Ultraschallwandlers (1, 2, 4) im fluiden Umgebungsmedium vorab durch Messung ermittelt werden.

4. Verfahren nach Anspruch 1,
   **dadurch gekennzeichnet,**
   **dass** die raumzeitlichen Sendewellenfelder $S(\underline{r},t)$ jedes Ultraschallwandlers (1, 2, 4) im fluiden Umgebungsmedium vorab durch mathematisch-numerische Berechnung oder durch eine Kombination von Messung und mathematischnumerischer Berechnung ermittelt werden.

5. Verfahren nach einem der Ansprüche 1, 3 oder 4,
   **dadurch gekennzeichnet,**
   **dass** als Gitterweite des diskreten Gitters, in dem die raumzeitlichen Sendewellenfelder $S(\underline{r},t)$ jedes Ultraschallwandlers (1, 2, 4) im fluiden Umgebungsmedium als Werte bereitgestellt werden, ein Wert kleiner oder gleich einer halben Wellenlänge der beim Ultraschallscan abgestrahlten Ultraschallwellen im Umgebungsmedium gewählt wird.

6. Verfahren nach einem der Ansprüche 1 bis 5,
   **dadurch gekennzeichnet,**
   **dass** die vorzeichenbehafteten Ultraschall-Amplituden $A_i(t)$ oder die daraus abgeleiteten Werte vor oder nach dem Mapping auf das Bildgebungsraster unter Ausnutzung der in den Wellenfeldschablonen gespeicherten oder aus den dort gespeicherten Größen ableitbaren Maximalamplituden korrigiert werden, um physikalisch gleichartig reflektierende Stellen im interessierenden Prüfvolumen mit der gleichen Echoamplitude bei der Bildgebung darzustellen.

7. Verfahren nach einem der Ansprüche 1 bis 6,
   **dadurch gekennzeichnet,**
   **dass** eine Größe der einzelnen Zellen der Wellenfeldschablonen kleiner oder gleich einer halben Wellenlänge der beim Ultraschallscan abgestrahlten Ultraschallwellen im interessierenden Prüfvolumen gewählt wird.

8. Verfahren nach einem der Ansprüche 1 bis 7,
   **dadurch gekennzeichnet,**
   **dass** das Verfahren mehrfach hintereinander durchgeführt wird, um bei einer ersten Durchführung des Verfahrens noch nicht bekannte Eigenschaften des Prüfobjekts (3), insbesondere eine äußere Kontur, interne geometrische Strukturen und/oder interne Grenzflächen, zu ermitteln, wobei jeweils bei einer Durchführung des Verfahrens ermittelte Eigenschaften des Prüfobjekts (3) bei der sich anschließenden Durchführung des Verfahrens für die Berechnung der raumzeitlichen Wellenfelder $W(\underline{r},t)$ im interessierenden Prüfvolumen verwendet werden.

9. Verfahren nach einem der Ansprüche 1 bis 8,
   **dadurch gekennzeichnet,**
   **dass** aus den raumzeitlichen Wellenfeldern $W(\underline{r},t)$ ortsabhängige Laufzeiten $t_0$ und Maximalamplituden $W_0$ mehrerer

unterschiedlicher Wellentypen oder Größen, aus denen diese ortsabhängigen Laufzeiten $t_0$ und Maximalamplituden $W_0$ ableitbar sind, bestimmt und in Form diskreter Wellenfeldschablonen für die unterschiedlichen Wellentypen gespeichert werden, wobei die vorzeichenbehafteten Ultraschall-Amplituden $A_i(t)$ oder die daraus abgeleiteten Werte des beim Ultraschallscan an jedem Messpunkt i detektierten Zeitsignals anhand der in den Wellenfeldschablonen für die unterschiedlichen Wellentypen gespeicherten Laufzeiten und Maximalamplituden oder Größen zur Bildgebung auf das diskrete ortsfeste Bildgebungsraster gemappt werden.

10. Verfahren nach einem der Ansprüche 1 bis 9,
**dadurch gekennzeichnet,**
**dass** bei Mehrfachdurchläufen der Ultraschallwellen durch einzelne Stellen im Prüfvolumen aufgrund von internen Reflexionen im Prüfobjekt (3) in den Wellenfeldschablonen ortsabhängige Laufzeiten $t_0$ und Maximalamplituden $W_0$ für jeden Durchlauf gespeichert werden, wobei die vorzeichenbehafteten Ultraschall-Amplituden $A_i(t)$ oder die oder daraus abgeleiteten Werte des beim Ultraschallscan an jedem Messpunkt i detektierten Zeitsignals anhand der in den Wellenfeldschablonen für die unterschiedlichen Durchläufe gespeicherten Laufzeiten und Maximalamplituden zur Bildgebung auf das diskrete ortsfeste Bildgebungsraster gemappt werden.

11. Verfahren nach einem der Ansprüche 1 bis 9,
**dadurch gekennzeichnet,**
**dass** vollständige Zeitsignale oder Abschnitte dieser Zeitsignale als die Größen, aus denen die ortsabhängigen Laufzeiten $t_0$ und Maximalamplituden $W_0$ ableitbar sind, aus den raumzeitlichen Wellenfeldern $W(\underline{r},t)$ bestimmt und in den Zellen der diskreten Wellenfeldschablonen gespeichert werden.

12. Verfahren nach einem der Ansprüche 1 bis 11,
**dadurch gekennzeichnet,**
**dass** aus den vorzeichenbehafteten Ultraschall-Amplituden $A_i(t)$ ermittelte Maxima als daraus abgeleitete Werte anhand der in den Wellenfeldschablonen gespeicherten Laufzeiten und Maximalamplituden oder Größen zur Bildgebung auf das diskrete ortsfeste Bildgebungsraster gemappt werden.

13. Verfahren nach einem der Ansprüche 1 bis 11,
**dadurch gekennzeichnet,**
**dass** die vorzeichenbehafteten Ultraschall-Amplituden $A_i(t)$ des an jedem Messpunkt i detektierten Zeitsignals anhand von in den Zellen der Wellenfeldschablonen gespeicherten Laufzeiten und Amplituden verschiedener Zeiten als jeweils vollständiges Zeitsignal auf das diskrete ortsfeste Bildgebungsraster gemappt werden.

14. Verfahren nach Anspruch 13,
**dadurch gekennzeichnet,**
**dass** aus den jeweils vollständigen Zeitsignalen der Zellen des Bildgebungsrasters einzelne Signalparameter extrahiert und bildgebend dargestellt werden.

15. Verfahren nach einem der Ansprüche 1 bis 14,
**dadurch gekennzeichnet,**
**dass** einer oder mehrere der bewegten Ultraschallwandler (1, 2, 4) als Mehrkanalwandler mit mehreren Wandlerelementen ausgebildet ist oder sind, wobei die raumzeitlichen Wellenfelder $W(\underline{r},t)$ in dem interessierenden Prüfvolumen dann jeweils für den gesamten Mehrkanalwandler, für die einzelnen Wandlerelemente oder für einzelne Gruppen von Wandlerelementen des Mehrkanalwandlers berechnet oder abgeleitet werden.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

4

3

Fig. 16

1 (a)

$w_0$

$t_0$

3

(b)

$W(t)$

Fig. 17

Europäisches
Patentamt

European
Patent Office

Office européen
des brevets

# EUROPÄISCHER RECHERCHENBERICHT

**Nummer der Anmeldung**

EP 24 17 3794

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SCHUBERT FRANK ET AL: "Numerical time-domain simulation of wave propagation and scattering in acoustic microscopy for subsurface defect characterization", TESTING, RELIABILITY, AND APPLICATION OF MICRO- AND NANO-MATERIAL SYSTEMS III, Bd. 5766, 9. Mai 2005 (2005-05-09), Seite 106, XP093208793, DOI: 10.1117/12.602070 * das ganze Dokument * ----- | 1-15 | INV. G01N29/06 G01N29/265 G01N29/44 |
| A | ALGERNON D ET AL: "Imaging of the Elastic Wave Propagation in Concrete Using Scanning Techniques: Application for Impact-Echo and Ultrasonic Echo Methods", JOURNAL OF NONDESTRUCTIVE EVALUATION, KLUWER ACADEMIC PUBLISHERS-PLENUM PUBLISHERS, NE, Bd. 27, Nr. 1-3, 23. Juli 2008 (2008-07-23), Seiten 83-97, XP019609221, ISSN: 1573-4862 * das ganze Dokument * ----- | 1-15 | |
| A | Schubert Frank ET AL: "3-D Ultrasonic Transducer Modeling Using the Elastodynamic Finite Integration Technique in Combination with Point-Source-Synthesis Article CITATIONS 5 READS 295", , 28. Mai 2014 (2014-05-28), XP093208784, Gefunden im Internet: URL:https://www.researchgate.net/publication/228365932 [gefunden am 2024-09-24] * das ganze Dokument * ----- -/-- | 1-15 | |

**RECHERCHIERTE SACHGEBIETE (IPC)**

G01N

Der vorliegende Recherchenbericht wurde für alle Patentansprüche erstellt

| Recherchenort | Abschlußdatum der Recherche | Prüfer |
|---|---|---|
| München | 8. Oktober 2024 | Barthélemy, Matthieu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

EP 24 17 3794

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2019/187107 A1 (ASADOLLAHI ET AL) 20. Juni 2019 (2019-06-20) * Zusammenfassung; Abbildungen * * das ganze Dokument * ----- | 1-15 | |
| A | JIAZE HE ET AL: "Numerical ultrasonic full waveform inversion (FWI) for complex structures in coupled 2D solid/fluid media", SMART MATERIALS AND STRUCTURES, IOP PUBLISHING LTD., BRISTOL, GB, Bd. 30, Nr. 8, 20. Juli 2021 (2021-07-20), Seite 85044, XP020368157, ISSN: 0964-1726, DOI: 10.1088/1361-665X/AC0F44 [gefunden am 2021-07-20] * Seiten 2-3; Abbildung 1 * * das ganze Dokument * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 8. Oktober 2024 | Barthélemy, Matthieu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

# EP 4 644 890 A1

**ANHANG ZUM EUROPÄISCHEN RECHERCHENBERICHT
ÜBER DIE EUROPÄISCHE PATENTANMELDUNG NR.**            EP 24 17 3794

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2024

| Im Recherchenbericht angeführtes Patentdokument | Datum der Veröffentlichung | Mitglied(er) der Patentfamilie | Datum der Veröffentlichung |
|---|---|---|---|
| US 2019187107 A1 | 20-06-2019 | KEINE | |

Für nähere Einzelheiten zu diesem Anhang : siehe Amtsblatt des Europäischen Patentamts, Nr.12/82

EPO FORM P0461

26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3548642 A

**In der Beschreibung aufgeführte Nicht-Patentliteratur**

- **M. BARTH et al.** Where X-Ray Imaging Falls - Delamination, Crack, and Micro-Pore Detection Using Ultrasonic Reflection Tomography in a Scanning Acoustic Microscope. *IEEE Nuclear Science Symposium and Medical Imaging Conference Record 2008*, 577-581